# EUROPEAN PATENT SPECIFICATION

(11) **EP 1 635 231 B1**
(45) Date of publication and mention of the grant of the patent: **14.12.2011**
(21) Application number: 05255480.5
(22) Date of filing: 07.09.2005
(51) Int. Cl.: G03H 1/02, G11B 7/0065

(54) **Method of producing a hologram element and optical head including said element**
Herstellungsverfahren eines holographischen Elements und optische Kopfeinrichtung mit einem solchem Element
Méthode de production d'un élément holographique et tête optique incluant ledit élément

(30) Priority: 10.09.2004 JP 2004263489; 14.04.2005 JP 2005117123; 28.04.2005 JP 2005132854
(43) Date of publication of application: 15.03.2006
(73) Proprietor: Ricoh Company, Ltd., Tokyo 143-8555 (JP)
(72) Inventor: Kobayashi, Masanori, Yokohama-shi, Kanagawa (JP); Sugimoto, Hiroyuki, Kawasaki-shi, Kanagawa (JP); Miyagaki, Kazuya, Yokohama-shi, Kanagawa (JP); Funato, Hiroyoshi, Chigasaki-shi, Kanagawa (JP)
(74) Representative: Lamb, Martin John Carstairs

(56) References cited:
- EP-A- 0 536 763
- WO-A-95/02880
- JP-A- 2003 039 394
- US-A- 5 594 713
- US-A- 6 072 566
- US-A1- 2001 033 400
- US-A1- 2004 017 761
- US-B1- 6 285 474

## Description

### BACKGROUND OF THE INVENTION

### 1. Field of the Invention

The present invention relates to a method of producing a hologram element able to transmit, reflect, diffract, or scatter an incident light beam, and more particularly, a hologram element which is dependent on the polarization state of the incident beam (thus referred to as a "polarization hologram element"), and is useful for reducing the size of an optical header for recording and reproducing data in an optical disk or a magneto-optical disk, or a hologram element which is able to improve light utilization efficiency of illumination light in an image display unit (for example, display units for reflection display by means of light transmission and scattering, or color display by means of light interference, or three-dimensional image display) or a projection display device, or a hologram element which is applicable to an optical switch for switching the light path of the incident beam depending on the polarization plane of the incident beam. In addition, the present invention relates to a method of producing an optical header using the hologram element.

### 2. Description of the Related Art

In the related art, the following methods of producing hologram elements are disclosed.

In Japanese Laid Open Patent Application No. 10-78503 (hereinafter, referred to as "reference 1"), the applicant of the present application proposed a method of fabricating a diffraction grating used in two-beam interference exposure on a photo resist, in which a photo mask having a transmission region during exposure is used to shield a portion of an interference pattern to define an exposure region.

In addition, Japanese Laid Open Patent Application No. 2005-11478 (hereinafter, referred to as "reference 2"), proposes a method of fabricating a diffraction grating used in two-beam interference exposure, in which a grating portion of an element is divided into plural divisions, the diffracted light beams from these divisional regions are received by separate photo detection regions, divergent light or converged light emitted from positions equivalent to light emission spots of a light source interferes with divergent light or converged light emitted from positions equivalent to light receiving spots corresponding to the photo detection regions, and the thus obtained interference pattern is exposed on a recording material.

In Japanese Laid Open Patent Application No. 11-52825 (hereinafter, referred to as "reference 3"), a method of fabricating a hologram element is proposed, in which a hologram image of an object is recorded on a first recording material to make a master copy; the master copy is superposed on a second material having a lower exposure sensitivity than the first recording material; then the recording area of the stacked structure is divided into plural divisions, and the hologram image is duplicated on the recording area by contact copying.

Japanese Laid Open Patent Application No. 11-202743 (hereinafter, referred to as "reference 4") discloses a method of fabricating a hologram element, in which positions of plural divergent points of hologram object light beams and reference light beams of different diffraction characteristics are set to be approximately the same, and light from this divergent point is exposed for duplication during contact duplication.

Japanese Laid Open Patent Application No. 11-212435 (hereinafter, referred to as "reference 5") discloses a method of producing a hologram, in which a master hologram, on which plural identical holograms are formed, is used to perform contact duplication; according to this method, plural identical holograms can be formed by whole-area exposure at one time.

Japanese Laid Open Patent Application No. 9-138632 (hereinafter, referred to as "reference 6") discloses a duplication method of a master diffraction grating using a 4f relay optical system including plural lenses. According to this method, even for a grating pattern of narrow pitches, a diffraction grating cell is formed which is obtained by faithfully reproducing the grating pattern from the master grating on a photosensitive material; hence, it is relatively easy to fabricate a diffraction grating array with high precision.

On the other hand, the following polarization selective hologram elements (polarization hologram elements) are disclosed in the related art.

Japanese Laid Open Patent Application No. 7-287117 (hereinafter, referred to as "reference 7") discloses a polarized beam splitter fabricated by forming a diffraction grating shape on an optical anisotropic substrate, and burying materials having specified diffractive indexes into grooves of the diffraction grating shape.

Japanese Laid Open Patent Application No. 10-92004 (hereinafter, referred to as "reference 8") discloses an optical anisotropic diffraction element fabricated by forming a diffraction grating shape on an optical isotropic substrate, and burying optical anisotropic materials into grooves of the diffraction grating shape.

Japanese Laid Open Patent Application No. 10-74333 (hereinafter, referred to as "reference 9") discloses an optical anisotropic diffraction element. To fabricate the optical anisotropic diffraction element, using a liquid crystal cell, which includes a photo-polymerized liquid crystal held by a transparent substrate having a periodic transparent electrode pattern, a voltage is applied on the transparent electrode pattern to align the liquid crystal periodically in the vertical direction for photo-polymerization, and at the same time, a portion of the liquid crystal, on which the voltage is not applied, is aligned in the horizontal direction for photo-polymerization, thus forming the optical anisotropic diffraction element having a periodic structure including horizontal alignment regions and vertical alignment regions.

Japanese Laid Open Patent Application No. 11-271536 (hereinafter, referred to as "reference 10") discloses a hologram element using the above photo polymerized liquid crystal. To fabricate the hologram element, exposure with interference light is performed on the photo-polymerized liquid crystal with the liquid crystal being horizontally aligned; after the exposed portion of the liquid crystal is periodically polymerized and solidified, an external electric field is applied on the unexposed portion of the liquid crystal, and the photo-polymerized liquid crystal reacts and solidifies while being vertically aligned.

Japanese Laid Open Patent Application No. 2000-221465 (hereinafter, referred to as "reference 11") discloses a diffractive optical element in which liquid crystals are aligned in a uniform direction relative to a fine periodic structure. To construct the fine periodical structure, an optical medium including the liquid crystals and polymer molecules is adjusted in a specific temperature range corresponding to a liquid crystal N-I (Nematic-to-Isotropic) transition temperature, and then two-beam interference exposure is performed.

In recent years and continuing, in order to reduce the size of an optical header (also referred to as an "optical pickup device" below), a laser diode and a photo detector (light receiving element) are arranged to be close to each other, and a polarization selective hologram element (that is, a polarization hologram element) is used to efficiently condense light emitted from the light diode (light source) on a disk without diffracting the light; after the light is reflected on the disk, only the retuning light, whose polarization plane is rotated by 90 degrees, is diffracted and efficiently directed to the light receiving element.

In an optical drive (also referred to as an "optical disk device") including the optical header, in order to increase intensity of the device, development is made of a light source having a shortened wavelength. When the above hologram element is used, since the diffraction angle is dependent on the wavelength, a diffraction grating having rather short pitches is required in order to realize a compact layout to obtain necessary refractive angles. However, with the wavelength of the light source being shortened, detection sensitivity of the photo detector (light receiving element) declines; hence, when the light source having a shortened wavelength is used, a highly efficient optical system is required.

Further, improvement of efficiency of the optical system is also required in order to increase write and read speed. Concerning the polarization selective hologram element (that is, a polarization hologram element), it is required to obtain high diffraction efficiency with short pitches.

The aforesaid reference 7 and reference 8 disclose techniques of periodic structures like the grating pitches, and in reference 7 and reference 8, for example, the diffractive grating has to be fabricated by dry etching. In the structures obtained by techniques disclosed in reference 7 and reference 8, in order to obtain high diffractive efficiency, grooves thereof have to be made deep, and this processing is difficult. Further, it is necessary to bury materials into the deep grooves uniformly.

In the technique disclosed in reference 9, the pitch of the grating is determined by the pitch of the transparent electrode. However, with reduced size of the electrode, if the thickness of the liquid crystal film is increased to increase the diffraction efficiency, the liquid crystal film may be even thicker than the pitch of the transparent electrode, and due to influence from neighboring electrodes, a desired electric field cannot be imposed on the liquid crystal film. In addition, with a short pitch, the alignment state of the vertically aligned liquid crystal region may influence the adjacent horizontally aligned liquid crystal region, thus, desired alignment states cannot be obtained.

In the technique disclosed in reference 6, although it is possible to shorten the pitches of exposure, it is difficult to form short pitches as being exposed because of thermal diffusion of reactive active seeds.

In the technique disclosed in reference 7, with two-beam interference exposure, a periodic structure of short grating pitches can be fabricated easily by utilizing phase separation of a polymer and a liquid crystal. Further, when fabricating the periodic structure with two-beam interference exposure, it is easy to obtain short grating pitches compared to the aforesaid etching process.

In addition, as for the diffraction efficiency, since a hologram element, which has a binary structure, exhibits the first order (± 1st order) or higher order diffraction, even if the second order (± 2nd order) or higher order diffraction is suppressed, since only light due to the + 1st order diffraction or the -1st order diffraction is utilized, utilization of the diffracted light is only 50% or lower.

It is disclosed in the related art, for example, in Japanese Laid Open Patent Application No. 9-50642 (hereinafter, referred to as "reference 12"), to arrange light receiving elements for the + 1st order diffracted light or the -1st order diffracted light, respectively. However, this arrangement makes the structure of the device complicated, and causes a rise in the cost.

Ideally, a polarization separation element like a blazed grating is desirable which is capable of obtaining the + 1st order diffracted light or the -1st order diffracted light only with high efficiency. But, as described above, it is difficult to obtain a periodic structure as desired by etching processing.

In contrast, with the two-beam interference exposure, by forming an inclined interference pattern of the two beams used for exposure, it is possible to obtain an element with high refraction efficiency of one of the + 1st order diffracted light and the -1st order diffracted light.

The two-beam interference exposure method is useful in fabrication of a polarization hologram element which has high refraction efficiency with short pitches. As described above, a method of fabricating the polarization hologram element is disclosed in reference 3. As disclosed in reference 3, a master hologram allowing an interference pattern to be exposed thereon is fabricated, and with this master hologram, the polarization hologram element duplicates a hologram image. In addition, as disclosed in reference 1, there are other methods of fabricating the polarization hologram element, in which a photo mask having a transmission region is used to shield a portion of an interference pattern during the two-beam interference exposure to define the exposure region.

However, because of the recording materials used in the above techniques of the related art, development processing of the photo resist is required; hence, a large number of fabrication steps are needed, and the productivity is low.

In addition, concerning the close-contact duplication exposure with a master substrate and a recording material being in close contact, as disclosed in reference 11, a composite film including liquid crystals and polymer molecules can be used as the recording material. In this method, the development processing is not necessary, and the productivity is relatively high. However, when using the polymerization reaction in liquid crystals (including the phase separation process), there exist problems in the spread of the reaction and in leakage of light due to multiple reflection.

It is known that holograms are widely used in publishing, even ceremonies, and in industrial and medical fields. For example, holograms can be used to fabricate a mark for preventing counterfeiting of credit cards or bills for purposes of security, for package design for purposes of decoration, in a spectroscopic diffraction grating in an optical header (optical pickup device) or a projector, as a display element in a head-up display or a three-dimensional display and so on, and as an optical element in optical communications, scanners, and optical ICs (integrated circuits). Particularly, security-related techniques are attracting attention, and in these techniques, holograms which are more delicate and have higher resolution are required.

In optical recording techniques, it is known that usage of short-wavelength light enables high density recording, and for this purpose, diffraction gratings having narrow pitches and high diffraction efficiency are required. As described, when using such diffraction gratings in an optical header, the polarization characteristics thereof are important.

In the related art, hologram elements can be fabricated by various methods such as a general exposure with a mask by using a stepper, electron beam direct writing, laser beam direct writing, and two-beam interference exposure. However, resolutions of mask exposure and laser beam direct writing are not high. With the method of electron beam direct writing, although relatively high resolutions are obtainable, fabrication equipment is quite expensive, and thus the fabrication cost is high.

With the above methods, it is difficult to fabricate a single hologram having complicated characteristics by only one exposure, while by multiple exposures, it is possible to record (fabricate) plural holograms having different diffraction characteristics in a single hologram element. However, when fabricating a single hologram having desired characteristics, for example, diffraction wavelength, diffraction angle, and focal length, it is necessary to precisely position and fix a photosensitive material for recording the hologram relative to a laser in order to perform exposure. In order to fabricate plural holograms the same as the above hologram, one has to repeat the positioning and fixing steps as many times as the number of the holograms to be fabricated; thus, a large number of fabrication steps and a large amount of fabrication time are needed. Further, when laminating hologram elements having different characteristics, it is necessary to position the hologram elements precisely relative to each other, and fix the hologram elements with an adhesive layer. Because multiple hologram photosensitive materials are used, the cost is high, and hence not suitable for mass production.

To solve this problem, a method is proposed (for example, in reference 5), in which a master hologram having multiple characteristics is fabricated, and a hologram photo-sensitive material is set in close contact with the master hologram. Then, light is irradiated from the side of the hologram photo-sensitive material or from the side of the master hologram to duplicate the hologram. According to this method, it is not necessary to repeat the bothersome positioning step, and plural duplications of the same hologram can be fabricated successively.

A method is proposed (for example, in reference 6), for duplicating a master hologram image on the photosensitive material by exposure with interference light. For example, from the side of the exposure light source, a master hologram, a first lens, a second lens, and the photo-sensitive material are arranged in order, the distance from the master hologram to the first lens is set to be the focal length f of the first lens, the distance from the first lens to the second lens is set to be the sum (2f) of the focal lengths of the first lens and the second lens, and the distance from the second lens to the photo-sensitive material is set to be the focal length of the second lens. That is, the master hologram, the first lens, the second lens, and the photosensitive material constitute a 4f relay optical system. According to this method, the master hologram can be duplicated with very high precision. In addition, with a light shielding mask being arranged in the relay optical system, it is possible to reduce noise light generated from the master hologram.

As for methods of producing a master hologram, in order that the hologram exhibit desired characteristics, computers are employed to make calculations, and patterns are written on a photo mask blank plate according to the calculation results by using an electron beam writing device to produce a first master hologram; independent from this process, resin for forming a volume hologram is applied on a glass substrate to prepare a volume hologram substrate; the first master hologram produced in advance is superposed on the resin layer applied on the volume hologram substrate so that the mask surface of the master hologram is in contact with the resin layer on the volume hologram substrate; then a laser beam is irradiated to expose the structure from the side of the master hologram. After the exposure, ultraviolet light irradiation processing (decomposition of the photo polymerization initiator) and heating treatment (diffusion movement of photo polymerizable compounds) are performed; as a result; the master hologram is duplicated on the resin layer applied on the volume hologram substrate.

Here, the hologram recording material used in fabrication and duplication of the above hologram (including the diffraction grating) can be photo sensitive materials like dichromate gelatin, photopolymer, photo-resist, photo-polymerized liquid crystal polymer, and polymer dispersed liquid crystal (a composite film of a non-polymerized liquid crystal and a polymerized polymer). When fabricating holograms by means of exposure with interference light using such kinds of materials in which polymerization reactions occur, depending on the size of the element to be fabricated, the shape of the periodical structure, the temperature during exposure, quantity of exposure, and other conditions, polymerization diffusion may occur; due to this, characteristics in the element being exposed may influence other regions or neighboring elements. Further, similarly, in the course of forming the desired structure in exposure with the interference light, scattering, multiple reflections on the substrate interface along with a change of the refractive index of materials, noise light included in the master hologram, and other unnecessary light may influence the element being exposed or neighboring elements.

WO 95/02880 discloses a holographic storage media for storing digital data in the form of an interference grating which includes a substrate over which a perforated opaque structure is disposed. The opaque structure has wells disposed therein, and a photopolymer material is disposed in the wells to form data storage regions.

US 2004/0017761 discloses an optical device including a light source for omitting diverging light, a polarizing beam splitter for transmitting or reflecting the diverging light according to a polarized light component, a collimator lens for converting the diverging light transmitted through the polarizing beam splitter into collimated light, and an objective lens for focussing the collimiated on an object.

US 2001/0033400 discloses that transmission and reflection type holograms may be formed using a polymer-dispersed liquid crystal material. It is disclosed that this material is a mixture of polymerizable monomer and liquid crystal, along with a photoinitiatior dye.

US 6072566 discloses an optical rotary device for adjusting a plane of polarization of light from a pixel of a display device.

US 5594713 discloses an optical pickup head apparatus comprising a light source for converging linearly polarized light onto an information medium, photodetector units for receiving a light beam reflected from the information medium, a liquid crystal hologram comprising a pair of transparent substrates with a liquid crysal sandwhiched therebetween, and a Faraday rotator for rotating a polarized direction of light beam for 45° in a light path leading from the light source to the information medium and rotating the polarized direction of the light beam by 45° in its opposite light path.

### SUMMARY OF THE INVENTION

It is a general object of the present invention to solve one or more of the problems of the related art.

A more specific object of the present invention is to provide a method of producing a hologram element by exposure with interference light on a photo-sensitive recording material, which is able to prevent influence of the spread of the polymerization reaction in the photo-sensitive recording material on the hologram element and other neighboring hologram elements, and to prevent light leakage or occurrence of other unnecessary interference light due to multiply reflection during exposure with interference light, and thus be able to improve productivity in mass production; and to provide an optical header using such a polarization hologram element.

According to a first aspect of the present invention, there is provided a method of producing a hologram element as set out in Claim 1.

As an embodiment, the isolated region isolates one hologram elements in plural areas.

As an embodiment, the isolated region corresponds to at least the area of one hologram element. Further, the method includes the step of cutting out at least one hologram element at a position of the isolated member corresponding to the area of the at least one hologram element.

As an embodiment, the recording material is held between a pair of substrates, each device portion is isolated by an isolation member, and the isolated region is formed in such a way that the device portions are arranged in a matrix manner. The method further includes the step of cutting the device portions at a position of the isolated member to divide the device portions into separate hologram elements.

As an embodiment, the interference light is generated by two or more light beams.

As an embodiment, the interference light is generated by using a master hologram. Further, a separation layer is formed on the master hologram; the interference light is irradiated by using a relay optical system.

As an embodiment, the photosensitive recording material film is formed between a pair of substrates, one of said substrates being thinner than the other one of said substrates.

As an embodiment, the recording material is formed from a composite material including a polymerized polymer.

As an embodiment, the recording material is formed from a composite material including a polymerized liquid crystal.

As an embodiment, the recording material is formed from a mixed composite material including a non-polymerized liquid crystal and a polymerized polymer.

As an embodiment, the recording material is formed from a mixed composite material including a polymerized polymer and at least one of a non-polymerized liquid crystal and a polymerized liquid crystal.

As an embodiment, the recording material is exposed to the interference light to induce a polymerization reaction and phase separation of the composite material to form a periodic structure. In addition, a refractive index modulation of the periodic structure varies along with a polarization direction of incident light.

As an embodiment, the isolation member also acts as a spacer for controlling a film thickness of the recording material.

As an embodiment, the isolation member is formed from a material capable of absorbing light of a wavelength of the light for exposure.

As an embodiment, the film of the recording material is formed in the isolated region by One Drop Fill (ODF) process.

As an embodiment, the isolation member is formed from a conductive material.

According to a second aspect of the present invention, there is provided a method of making an optical header as set out in Claim 20.

According to the present invention, a hologram element manufactured according to an embodiment of the present invention includes a pair of substrates, an isolation member that is provided between the substrates and forms an isolated region, and a photosensitive recording material sealed in the isolated region, and the hologram element includes a periodic structure formed by exposing the recording material to interference light. In addition, in the hologram element, recording material (photosensitive recording material) is isolated by an isolation member prior to exposure with the interference light. The isolation member is able to prevent unnecessary scattered light, stray light, and spread of a polymerization reaction in the photosensitive recording material during exposure with interference light.

As a result, exposure of one isolated device region can be performed without being affected by unnecessary light, and without being affected by the polymerization reaction in neighboring regions. This can improve productivity of the hologram element.

According to the present invention, when fabricating the hologram element, prior to exposure with the interference light, the recording material is separated into plural regions with the isolation member in each hologram element. The isolation member is able to prevent unnecessary scattered light, stray light, and spread of a polymerization reaction in the photosensitive recording material during exposure with interference light. As a result, exposure of one isolated device region can be performed without being affected by unnecessary light, and without being affected by the polymerization reaction in neighboring regions. This can improve productivity of the hologram element when the hologram element has multiple regions of different characteristics.

According to the present invention, when fabricating the hologram element, prior to exposure with the interference light, the recording material is isolated with the isolation member in the area of each hologram element. The isolation member is able to prevent unnecessary scattered light, stray light, and spread of a polymerization reaction in the photosensitive recording material during exposure with interference light. As a result, exposure of one isolated device region can be performed without being affected by unnecessary light, and without being affected by the polymerization reaction in neighboring regions. This can improve productivity of the hologram element.

According to the present invention, prior to exposure with the interference light, the recording material is isolated with the isolation member in the area of each hologram element, and one isolated region is in correspondence to one hologram element. Because in the isolated region, there is no hologram region, with the isolated region as a cutting position, the hologram element can be cut out without degrading the characteristics of the hologram. This can improve productivity of the hologram element.

Specifically, in the hologram element, there is one or more device portions each having a periodic structure, the composite material forming the recording material is held between a pair of substrates, each of the device portions is isolated by the isolation member, the isolation member is arranged in such a way that the device portions are arranged in a matrix manner, and the device portions are cut at a position of the isolated member to divide the device portions into separate hologram elements. In this way, the hologram elements are mass-produced with one hologram element being fabricated in one isolated region.

In addition, the periodic structure of the hologram element is duplicated by exposing the recording material to interference light to form an interference pattern on the hologram element, and the periodic structure is formed by the polymerization reaction and phase separation of the recording material. Because each device region is isolated by the isolation member, the isolation member can prevent influence from the polymerization reaction on the neighboring elements. Therefore, it is possible to narrow the interval between the neighboring elements and improve productivity and light utilization.

In addition, the refractive index modulation of the periodic structure varies along with the polarization direction of the incident light, and hence, the periodic structure is able to transmit, reflect, diffract, or scatter the incident light according to the polarization direction of the incident light.

In the present invention, the interference light used for exposure is generated by a number of beams. For example, the hologram element is fabricated by two-beam interference exposure. Or, the interference light is generated by using a master hologram.

When exposure with interference light is performed without using the master hologram, it is necessary to use a half mirror or.a beam splitter to split a light beam into two or more beams, and to adjust the interference pattern of these beams. In this case, although depending on optical elements to be used, the exposure optical system requires a relatively large space because of limitations of specifications and arrangement, and the device becomes large.

In contrast, when exposure with interference light is performed by using the master hologram, because the interference light is generated by using the master hologram, it is not necessary to split the light beam and to adjust the interference pattern, the exposure optical system does not require a large space, noise occurring during exposure in adjustment of the interference pattern can be reduced, and this can improve productivity of the hologram element.

In the present invention, because exposure with interference light is performed by using a master hologram, the exposure optical system can be simplified.

By narrowing the interval between the master hologram and the recording material (photosensitive material), it is possible to increase the reproduction accuracy of the interference pattern. Specifically, a separation layer may be formed on the master hologram to be in close contact with the photosensitive material, the reproduction accuracy of the interference pattern can be increased, and this can improve productivity of the hologram element.

When exposure with interference light is performed by using the master hologram, because the interference light is generated by using the master hologram, the hologram element fabricated with the interference light is largely affected by the master hologram. Due to this, the reproduction accuracy of the master hologram is important, and when the master hologram itself generates noise light, it is required to further reduce the noise light.

In the present invention, because the interference light is processed by a relay optical system, and the noise light generated by the master hologram is reduced, only the interference pattern of necessity is duplicated by exposure with interference light, and the exposure can be performed with high reproduction accuracy of the master hologram. This can improve productivity of the hologram element.

In the present invention, because exposure with interference light is performed by using the master hologram, the exposure optical system can be simplified. But, when the master hologram is used in exposure with interference light, the region of the generated interference pattern becomes small when it is moved far from the master hologram, and the reproduction accuracy lowers. For this reason, if the interval between the master hologram and the recording material (photosensitive material) is small, the exposure region of the interference pattern becomes broad, it is possible to increase the reproduction accuracy. Especially, this is more effective when the recording material is divided into plural regions inside the hologram element. Therefore, with a thin substrate, which determines the interval between the master hologram and the photosensitive material, the productivity of the hologram element can be improved.

In the hologram element, the recording material (photo-sensitive material) of the hologram is formed from (1) a composite material including a polymerized polymer, (2) a composite material including a polymerized liquid crystal, (3) a mixed composite material including a non-polymerized liquid crystal and a polymerized polymer, or (4) a mixed composite material including a polymerized polymer and at least one of a non-polymerized liquid crystal and a polymerized liquid crystal. Specifically, use can be made of (a) a polymerized polymer, (b) a polymerized liquid crystal, (c) a mixture of a non-polymerized liquid crystal and a polymerized polymer, (d) a mixture of a polymerized polymer and a polymerized liquid crystal, or (e) a mixture of a polymerized polymer, a non-polymerized liquid crystal, and a polymerized liquid crystal.

For example, the composite material constituting the recording material may be a photo polymerized polymer, such as a photopolymer, a photo resist, and a polymer liquid crystal; thereby, it is possible to select the resolution, exposure sensitivity, and photo-sensitive wavelength band in a wide region, and it is possible to fabricate a hologram element superior in environment tolerability, and of many degrees of freedoms in selection of the film thickness and size. In addition, because the granularity is small, high diffraction efficiency and high transparency, which are features of a hologram, are obtainable. In addition, when using a polymer dispersed liquid crystal, which is a mixture of a non-polymerized liquid crystal and a polymerized polymer, as the composite material constituting the recording material, it is possible to fabricate a polarization hologram element, which has polarization dependence caused by phase separation during exposure with the interference light.

In the present invention, as described above, the photo-sensitive recording material of the hologram element may be formed from one of a polymerized liquid crystal, a non-polymerized liquid crystal, and a polymerized polymer (a polymerized monomer, or prepolymer), or a mixture of some of these materials, and by a polymerization reaction and phase separation of the composite material during exposure with the interference light, it is possible to easily form a periodic structure of the hologram, and obtain a polarization hologram element in which the refractive index modulation varies along with a polarization direction of the incident light.

In the present invention, because the isolation member also acts as a spacer, it is possible to increase the accuracy of the film thickness of the hologram element (that is, the gap between substrates). This can improve productivity of the hologram element.

In the present invention, because the isolation member is formed from a material capable of absorbing light of a wavelength of the light for exposure, it is possible to prevent unnecessary scattered light occurring during exposure with the interference light, unnecessary light due to multiple reflections between the substrates, which may degrade the hologram element. As a result, exposure of one isolated device region can be performed without being affected by unnecessary light, and the isolated region can be made small. This can improve productivity of the hologram element.

In the present invention, when fabricating the hologram element, specifically, when forming a film of the photo-sensitive recording material, the One Drop Fill (ODF) process is used, which allows a tiny quantity of the photo-sensitive recording material to be applied, for example, by inkjet. Therefore, the material can be applied to the isolated region in an appropriate amount, thereby forming a uniform film. This can reduce the number of processing steps compared to vacuum injection, and can improve productivity of the hologram element.

In the present invention, the isolation member may be formed from a conductive material, thus it is possible to apply an electric field between isolated regions. For example, when a dielectric-anisotropic liquid crystal is used as the photosensitive recording material, the liquid crystal alignment between the isolated regions can be controlled by the applied electric field; hence, it is possible to enlarge the birefringence of the liquid crystal in the hologram element. This large birefringence can improve the incidence angle dependence and wavelength dependence, and improve polarization dependence.

With the above hologram element, it is possible to make an optical device compact, and improve overall performance of the device. For example, it is possible to make an optical header compact, reduce noise of an optical switch, and increase the brightness of a display.

In an optical header of the present invention, because the hologram element is used as an optical element for deflecting the reflected light from the recording medium to the photo detector, by making the hologram element polarization dependent, the hologram element is able to transmit, reflect, diffract, or scatter the incident light according to the polarization direction of the incident light; therefore, on the light path of the light emitted from the light source, the light is more effectively condensed on the recording medium while diffraction essentially does not occur. On the returning light path (the polarization plane is rotated by 90°), light having information can be diffracted with a high diffraction efficiency. Therefore, it is possible to obtain a compact optical header having high light utilization efficiency.

These and other objects, features, and advantages of the present invention will become more apparent from the following detailed description of preferred embodiments given with reference to the accompanying drawings.

### GRIEF DESCRIPTION OF THE DRAWINGS

FIG. 1A through FIG. 1C are diagrams schematically illustrating a method of fabricating a polarization hologram element according to a first embodiment;
FIG. 2 is a perspective view illustrating a method of producing the hologram of the present embodiment in large volume;
FIG. 3 is a perspective view illustrating another method of producing the hologram of the present embodiment in large volume;
FIG. 4 is a perspective view illustrating another method of producing the hologram of the present embodiment in large volume;
FIG. 5 schematically illustrates an exposure area on the master hologram 10 and an exposed area on the recording material 21 to explain the problem of polymerization reaction spread;
FIG. 6 schematically illustrates a device for producing the hologram of the present embodiment;
FIG. 7 is a plan view of the hologram element 20 in which the whole recording material 21 is exposed by multiple times exposure;
FIG. 8 is a plan view and cross-sectional views of the hologram element 20 for illustrating the isolation members 24;
FIG. 9 is a plan view of the hologram element 20 illustrating a method for preventing light leakage;
FIG. 10 is a cross-sectional view of a portion of the hologram element 20 explaining the One Drop Fill (ODF) process;
FIG. 11A and FIG. 11B are cross-sectional views illustrating the contact condition between the master hologram 10 and the hologram element 20;
FIG. 12 is a plan view of the hologram element 20 illustrating isolation members formed from a conductive material;
FIG. 13A and FIG. 13B are a plan view and a cross-sectional view of a master hologram produced by two-beam interference exposure using a photo resist;
FIG. 14A and FIG. 14B are a plan view and a cross-sectional view exemplifying the hologram element 20 including a recording material sealed between two substrates;
FIG. 15A and FIG. 15B are a cross-sectional view and a plan view illustrating a method of the exposure for hologram duplication with an opening mask being provided between the master hologram and the cell;
FIG. 16A and FIG. 16B are a plan view and a cross-sectional view illustrating a cell in which the isolation members 24 are provided;
FIG. 17A and FIG. 17B are a plan view and a cross sectional view illustrating a cell 20 in which plural isolation members are provided;
FIG. 18 is a diagram exemplifying a basic configuration of an optical header (optical pickup device) including the polarization hologram element of the present embodiment;
FIG. 19 is a view schematically illustrating an interference exposure device for producing a hologram element;
FIG. 20 is a diagram illustrating hologram regions in a single hologram element;
FIG. 21 is a diagram illustrating a master hologram having plural hologram regions;
FIG. 22A and FIG. 22B are cross-sectional views of a cell including the recording material held by two substrates for explaining a problem caused by the thickness of the substrates;
FIG. 23A and FIG. 23B are cross-sectional views of a cell including by two substrates which have different thicknesses;
FIG. 24A and FIG. 24B are cross-sectional views of a cell illustrating exposure with interference light by using a master hologram with a separation layer being disposed between the master hologram and the recording material;
FIG. 25A and FIG. 25B are diagrams illustrating a single master hologram having plural hologram regions;
FIG. 26 is a schematic view illustrating a relay optical system used for exposure with interference light;
FIG. 27 is a schematic view illustrating another relay optical system used for exposure with interference light;
FIG. 28A and FIG. 28B schematically illustrate exposure areas on the master hologram 10 and exposed areas on the recording material 21;
FIG. 29A and FIG. 29B show the recording material 21 for schematically illustrating the method of producing the hologram of the present embodiment;
FIG. 30A is a plan view of a hologram element having plural isolated regions;
FIG. 30B is an enlarged view of a portion of the hologram element in FIG. 30A;
FIG. 31A and FIG. 31B are a plan view and a cross-sectional view exemplifying a cell of the present embodiment;
FIG. 32A and FIG. 32B are a cross-sectional view and a plan view illustrating a method of exposure for hologram duplication with an opening mask being disposed between the master hologram and the cell;
FIG. 33 shows a plan view and a cross-sectional view of a cell including three isolation regions;
FIG. 34 shows a cross-sectional view and a plan view of a cell in which cell photo-sensitive material is sealed between two substrates;
FIG. 35 shows a cross-sectional view and a plan view of a cell including a separation layer for sealing the photo-sensitive material;
FIG. 36 shows a cross-sectional view and a plan view of a cell including conductive isolation members.

### DESCRIPTION OF THE PREFERRED EMBODIMENTS

Below, preferred embodiments of the present invention are explained with reference to the accompanying drawings.

### First Embodiment

Below, descriptions are made of a configuration and operations of a hologram element of the present embodiment, and a method of producing the hologram element.

In the present embodiment, a polarization hologram element is used as an example, which has a periodic structure, the refractive index modulation of which changes with the polarization direction of incident light, and a method of producing such a polarization hologram element is described. More particularly, it is assumed that the polarization hologram element is fabricated by duplicating the hologram region of the periodic structure on a recording material by using a master hologram.

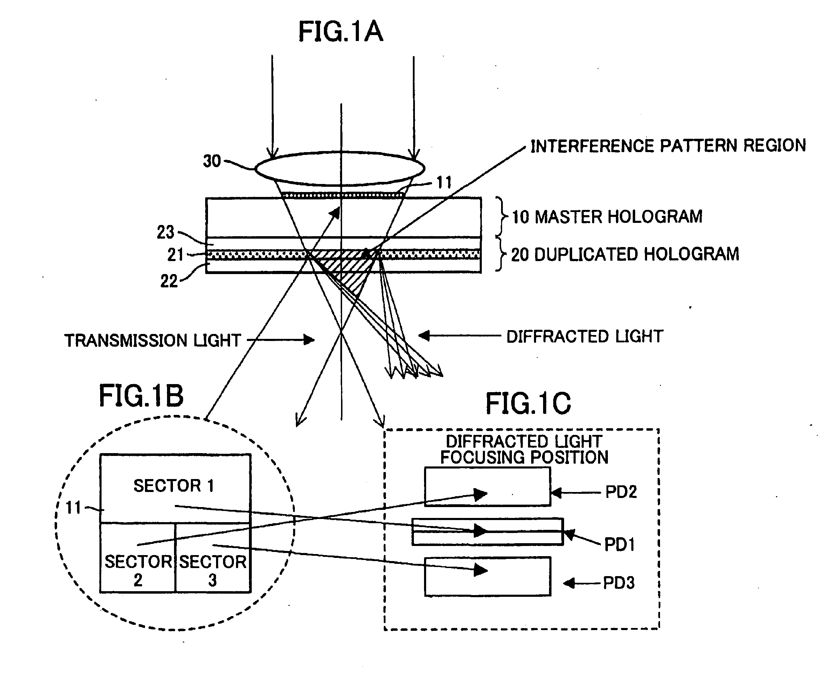

FIG. 1A through FIG. 1C are diagrams schematically illustrating a method of fabricating a polarization hologram element according to the present embodiment.

As illustrated in FIG. 1A, a master hologram 10 and a structure including substrates 22, 23 and a photo sensitive recording material 21 sandwiched by the substrates 22, 23 are arranged to be in close contact with each other. The structure is to be produced as a duplicated hologram 20.

Light having a specific wavelength for exposure is irradiated on a hologram region 11 of the master hologram 10 via a collimator 30; light transmitting through the master hologram 10 and light diffracted from the master hologram 10 interfere with each other and generate an interference pattern. This interference pattern can be duplicated on the recording material 21, thereby producing the hologram element 20.

In FIG. 1A, the collimator 30 is used to condense the light transmitting through the master hologram 10 and light diffracted from the master hologram 10.

As illustrated in FIG. 1B, the hologram region 11 of the master hologram 10 is divided into three sectors (sector 1, sector 2, sector 3).

FIG. 1C illustrates three light receiving elements (photo detectors) PD1, PD2, and PD3 in an optical header.

The structures shown in FIG. 1A and FIG. 1B are suitable for an optical header. Specifically, when the master hologram 10 is used in an optical header, focus positions of diffracted light from the hologram region of the duplicated hologram 20 correspond to the three light receiving elements PD1, PD2, and PD3, respectively.

It should be noted that the present embodiment is not limited to this configuration. A master hologram can be used which generates divergent or parallel transmission light and diffraction light, generally, master holograms suitable for intended applications can be used.

The hologram region 11 of the master hologram 10 can be fabricated by general hologram production methods, such as two-beam interference exposure, electron beam lithography or photolithography based on an interference pattern calculated by a computer.

It is preferable that the ratio of strength of the transmission light and the diffraction light be roughly 1 : 1 at the exposure wavelength.

For example, the photo sensitive recording material 21 of the hologram element 20 can be formed from a polymerized liquid crystal, a non-polymerized liquid crystal, a polymerized polymer (a polymerized monomer or a prepolymer), or a mixed composite material including some of these materials. When necessary, a photo polymerization initiator can be added.

For example, the polymerized liquid crystal may be a liquid crystalline monofunctional acrylate monomer, a liquid crystalline meta-acrylate monomer, a liquid crystalline difunctional diacrylate monomer, or a liquid crystalline dimeta-acrylate monomer. These materials may include a methylene chain between the functional group of acryloyloxy and the liquid crystalline skeleton.

In addition, the non-polymerized liquid crystal may be any liquid crystal exhibiting diffractive anisotropy, having a phase structure of any one of the Nematic phase, cholesteric phase, and smectic phase. For example, well known liquid crystals can be used, for example, which have skeletons formed from one of biphenyl, tert-phenyl, phenyl-cyclohexane, biphenyl-cyclohexane, benzoic acid phenyl ester, cyclohexane carboxylic acid phenyl ester, phenyl-pyrimidine, phenyl-dioxane, tolan, 1-phenyl-2-cyclohexylethane, 1-phenyl-2-biphenylethane, 1-cyclohexylethane-2-biphenylethane, biphenyl carboxylic acid phenyl ester, or 4-cyclohexyl-benzoic acid phenyl ester, and have an alkyl group, an alkoxy group, or a cyano group acting as a polarity assigning group for assigning dielectric anisotropy, and have a halogen group as a substituent group.

Preferably, the polymerized monomer or the prepolymer thereof is formed from materials having large polymerization curing shrinkage. For example, a photo-polymerizable compound having an ethylene unsaturated bond can be used as the polymerized monomer, such as a monomer, an oligomer, a prepolymer, and mixtures of them, each of which includes at least one ethylene unsaturated double bond in one molecule, and can be photo-polymerized and photo bridged.

In addition, the monomer and copolymer may also be an unsaturated carboxylic acid and unsaturated carboxylates, or an ester of the unsaturated carboxylic acid and an aliphatic polyalcohol compound, an amide of the unsaturated carboxylic acid and an aliphatic polyamine compound. Particularly, a polyfunctional monomer is preferable because it has large polymerization curing shrinkage.

The unsaturated carboxylic acid polymer may be an acrylic acid, a meta-acrylic acid, an itaconic acid, a crotonic acid, an isocrotonic acid, a maleic acid, and halogen-substituted unsaturated carboxylic acid thereof, such as chlorinated unsaturated carboxylic acid, brominated unsaturated carboxylic acid, or fluorinated unsaturated carboxylic acid.

The unsaturated carboxylate may be sodium salts and potassium salts of the above acids, and may be urethane acrylates, polyester acrylates, polyfunctional acrylates or methacrylates of epoxy resins and an acrylic acid.

It should be noted that a thermal polymerization inhibitor or a plasticizer can be added to the above materials.

The photo polymerization initiator may be any well known ones, for example, biacetyl, acetophenone, benzophenone, Michler's ketone, benzyl, benzoinalkylether, benzyldimethylketol, 1-hydroxy-2-methyl-1-phenylpropane-1-one, 2-chlorothioxanthone, methylbenzoylformate, 1-(4-isopropylphenyl)-2-hydroxy-2-methylpropane-1-one, diethoxyacetophenone, 1-hydroxycyclohexyl-phenylketone, 2,2-dimethoxy-1,2-diphenyl-ethan-1-one, α-aminoalkylphenone, bis-acylphoshinoxide, and metallocene.

The quantity of the photo polymerization initiator to be added depends on the absorption capacity of the material at the wavelength of the irradiation light, and can be appropriately adjusted according to exposure conditions in duplication.

When duplicating the master hologram 10, by appropriately adjusting the exposure conditions, the interference pattern corresponding to the master hologram 10 can be formed on the recording material 21 by exposure, which is formed from composite materials as described above, and thereby forming a periodic structure on the recording material 21 having a refractive index modulation changing with the polarization direction of incident light, that is, modulation of the refractive index in the periodic structure depends on the polarization direction of the incident light.

For example, the composite materials forming the recording material 21 may be HPDLC (Holographic Polymer Dispersed Liquid Crystal), which is obtained by dispersing a non-polymerized liquid crystal and a photo polymerization initiator in a polymerized polymer, or may be PPLC (Photo-Polymerized Liquid Crystal), which is obtained by mixing a polymerized liquid crystal and a photo polymerization initiator.

Below, a description is made of formation of the interference pattern on the recording material 21 by exposure.

For example, in the interference pattern formed on HPDLC, the monomer, which is a component of the composite material forming the recording material 21, is moved to the bright portion of the interference pattern (that is, phase separation between the polymer and the liquid crystal occurs), and is polymerized and cured.

The liquid crystal, which is a component of the composite material forming the recording material 21, remains at the dark portion of the interference pattern, and is drawn by the polymer cured in the bright portion; thereby, the liquid crystal is aligned in a specific direction. Because of alignment of the liquid crystal, if the incident light is linearly-polarized with the polarization directions thereof being perpendicular to each other, for one polarization direction of the incident light, the refractive index of the liquid crystal is small, and the incident light is not affected by the variation of the refractive index of the liquid crystal; hence, substantially all of the incident light transmits through the recording material 21. On the other hand, for the other polarization direction of the incident light, the refractive index of the liquid crystal is large, and the incident light is affected by the variation of the refractive index of the liquid crystal; hence, nearly all of the incident light is diffracted. As a result, the HPDLC functions as a polarization hologram device.

When the recording material 21 is formed from PPLC, the liquid crystal having a functional group for photo-polymerization is sealed into the space between transparent electrodes (for example, formed from ITO) and a substrate carrying an alignment layer for aligning the liquid crystal, and the liquid crystal is aligned there. When the recording material 21 is exposed to interference light, an interference pattern is formed on the recording material 21, and in the bright portion of the interference pattern on the recording material 21, the liquid crystal molecules are polymerized and cured. Meanwhile, in the dark portion of the interference pattern on the recording material 21, the state of the liquid crystal molecules remains un-cured.

A light beam is irradiated on the liquid crystal layer with a voltage being applied on the transparent electrodes sandwiching the liquid crystal layer. Due to the applied voltage, the liquid crystal in the dark portion of the interference pattern is aligned in a direction perpendicular to the substrate, and is cured due to light irradiation.

As a result, in correspondence to the distribution of the bright and dark portions of the interference pattern, a periodic structure of the liquid crystal is formed, in which the liquid crystal is aligned in the vertical direction and in the horizontal direction alternately.

When linearly-polarized incident light with the polarization directions thereof being perpendicular to each other is incident on a diffraction grating (a hologram) recorded in this way, if the incident light has a polarization direction being the same as a short axis direction of the liquid crystal molecules aligned in the horizontal direction, regardless of the periodic alignment of the liquid crystal in the vertical direction and in the horizontal direction, the incident light is not affected by the variation of the refractive index of the liquid crystal, and nearly all of the incident light transmits through the recording material 21. On the other hand, if the incident light has a polarization direction perpendicular to the aforesaid polarization direction, that is, the same as a long axis direction of the liquid crystal molecules aligned in the horizontal direction, the incident light is affected by the variation of the refractive index of the liquid crystal because of the periodic alignment of the liquid crystal in the vertical direction and in the horizontal direction, so that nearly all of the incident light is diffracted.

As described above, because of the phase separation occurring together with the polymerization reaction in the composite material constituting the recording material 21, or because of the polymerization reaction and the change of the alignment due to the external electric field, it is possible to produce a polarization hologram having polarization selectivity.

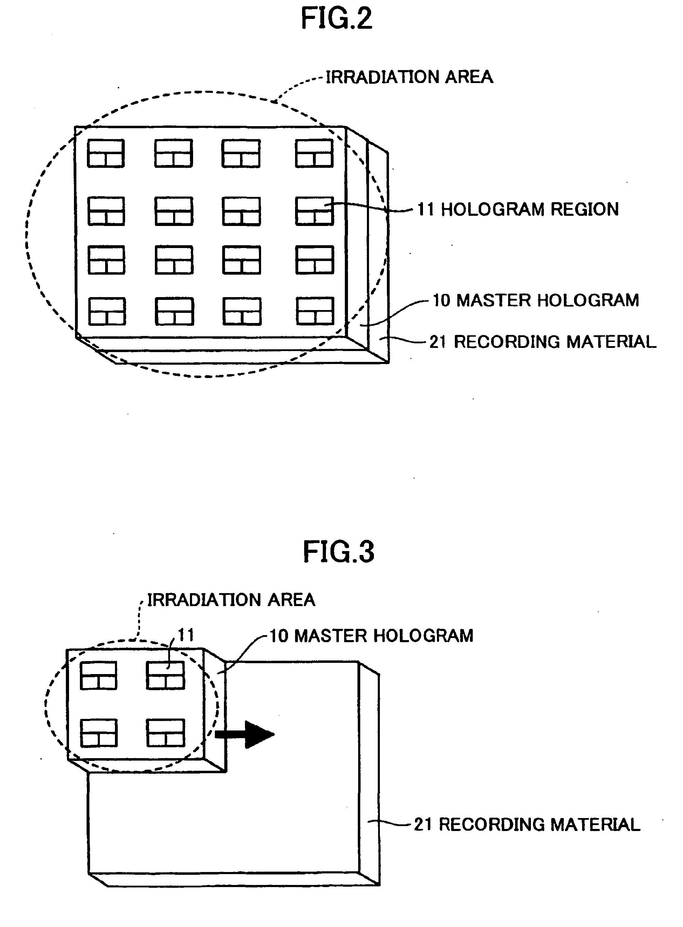

FIG. 2 is a perspective view illustrating a method of producing the hologram of the present embodiment in large volume.

As illustrated in FIG. 2, the master hologram 10 is designed to include plural hologram regions 11, and the whole recording material 21 is exposed to duplicate the hologram regions 11 in the recording material 21 at one time.

FIG. 3 is a perspective view illustrating another method of producing the hologram of the present embodiment in large volume.

As illustrated in FIG. 3, the master hologram 10 includes plural hologram regions 11, and a part of the recording material 21 is exposed to duplicate the hologram regions 11 in the recording material 21 at one time. Next, the master hologram 10 or the recording material 21, or both of them are moved to repeat exposure and duplication as above, and finally the whole recording material 21 is exposed.

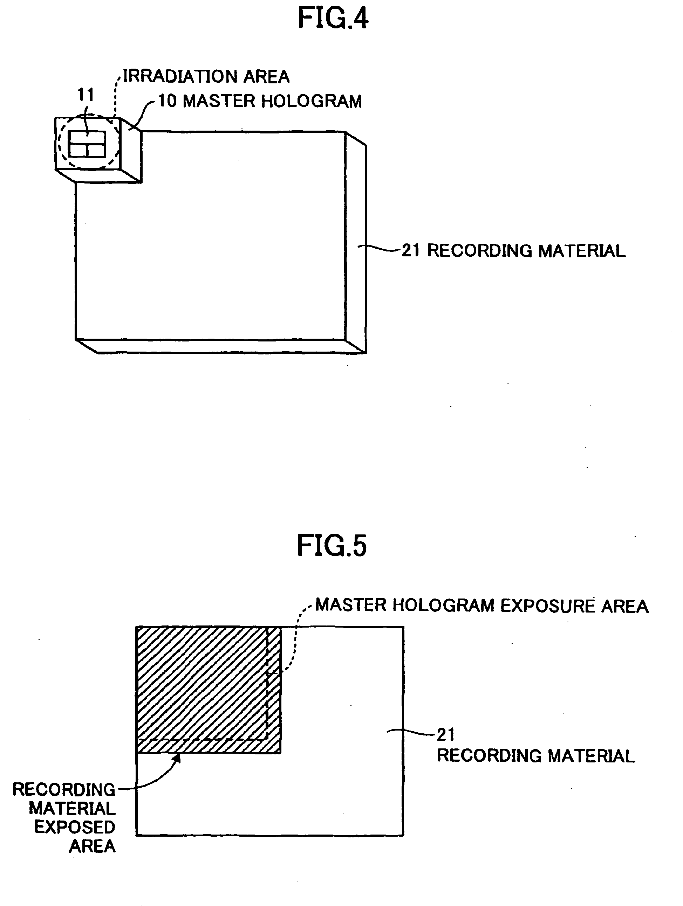

FIG. 4 is a perspective view illustrating another method of producing the hologram of the present embodiment in large volume.

As illustrated in FIG. 4, the master hologram 10 includes one hologram region 11, and the same as the method shown in FIG. 3, a part of the recording material 21 is exposed to duplicate the hologram region 11 to the recording material 21 at one time, then, the master hologram 10 or the recording material 21, or both of them are moved to repeat exposure and duplication as above, and finally the whole recording material 21 is exposed.

In the method shown in FIG. 2, because the exposure area at one time is very large, very high exposure power is required, otherwise, exposure time becomes very long.

In this sense, methods involving multiple times of exposure, as shown in FIG. 3 and FIG. 4, are preferable in respect of exposure power and exposure time. In addition, a master hologram having fewer hologram regions can be fabricated much easily.

In the case of multiple times of exposure, however, the recording material 21 is influenced by spread of the polymerization reaction.

FIG. 5 schematically illustrates an exposure area on the master hologram 10 and an exposed area (an area of the cured liquid crystal) on the recording material 21 to explain the problem of polymerization reaction spread.

As shown in FIG. 5, because of the polymerization reaction spread, the exposed region on the recording material 21 is broader than the exposure area on the master hologram 10.

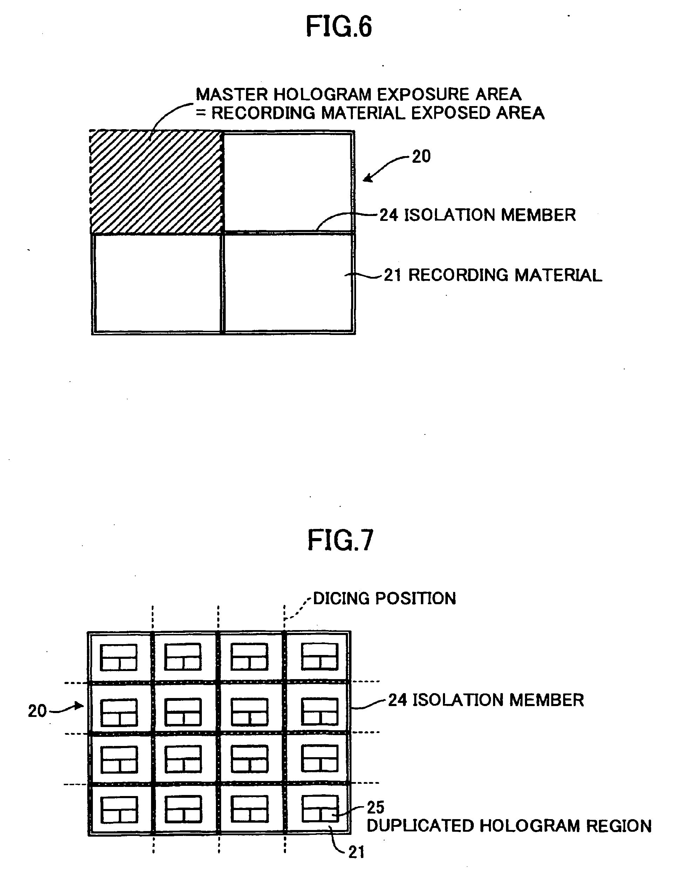

FIG. 6 is a plan view of the hologram element 20 of the present embodiment.

As illustrated in FIG. 6, isolation members 24 are provided and arranged in a matrix manner, thereby forming plural isolated regions. The recording material 21 is sealed into the isolated regions, and each hologram region (a device region) is isolated. Thereby, it is possible to prevent influence from the spread of the polymerization reaction.

For example, each isolation member 24 is a light curable adhesive agent or a heat curable adhesive agent, which are commonly used in liquid crystal displays. For example, the isolation members 24 can be formed by screen-printing or the like, but they can also be formed by other methods.

FIG. 7 is a plan view of the hologram element 20 in which the whole recording material 21 is exposed by multiple times exposure.

As illustrated in FIG. 7, in the duplicated the hologram element 20, the recording material 21 includes plural hologram regions (device regions) 25, which are duplicated by exposure. Because the isolation members 24 are arranged in a matrix manner, each of the hologram regions 25 is enclosed by the isolation members 24, hence, plural hologram regions 25 can be formed at the same time. For example, the recording material 21 is cut at a position of the isolated members 24 by a dicing saw or others, and the recording material 21 can be divided into separate hologram elements, thereby producing the polarization hologram elements of the present embodiment in large volume.

For example, the isolation members 24 may be spherical spacers or fiber spacers used in liquid crystal displays.

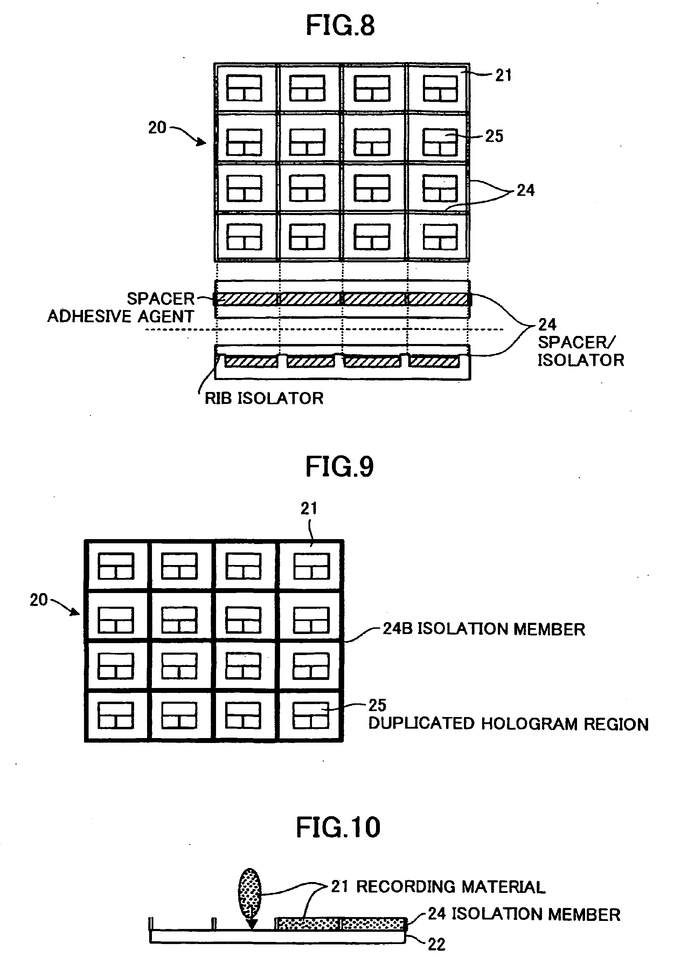

FIG. 8 includes a plan view and cross-sectional views of the hologram element 20 for illustrating the isolation members 24.

As illustrated in FIG. 8, the isolation members 24 may serve as spacers to control the gap between the substrates 22 and 23 or the film thickness of the recording material 21. For example, such isolation members 24 may be films, or the isolation members 24 may be projections on the surface of the substrate fabricated by photolithography, etching, molding, or other techniques. The thickness of the isolation members 24 can be appropriately selected to obtain a desired thickness of the hologram layer in accordance with variation of the refractive index related to the wavelength and the periodic structure.

Because of the isolation members 24, it is possible to prevent influence of the spread of the polymerization reaction on the neighboring hologram elements.

Meanwhile, during exposure with interference light, light leakage occurs due to multiple reflections between the substrates 22, 23, which hold the recording material 21.

FIG. 9 is a plan view of the hologram element 20 illustrating a method for preventing light leakage.

As illustrated in FIG. 9, isolation members 24B are formed from a material capable of absorbing light having an exposure wavelength. Because of the isolation members 24B, it is possible to prevent influence of light leakage on the neighboring hologram elements caused by multiple reflections during exposure with interference light, thereby avoiding unnecessary isolation of the neighboring hologram elements.

For example, the material of the isolation members 24B can be appropriately selected according to the target wavelength. For example, it may be chromium, chromium oxide, resins with carbon or pigments being dispersed therein, or resists with pigments being dispersed therein. The pigments may be anthraquinone-based dyes at the red wavelength region, or phthalocyanine-based pigments at the green or blue wavelength region. In addition, the material for forming a resist may be a radical polymerized photo polymer formed from a polyfunctional acrylic ester monomer, a photo polymerization initiator from trihalomethyl triazine, and a copolymer of acrylic acid and acrylic ester. But the material of the resist is not limited to this.

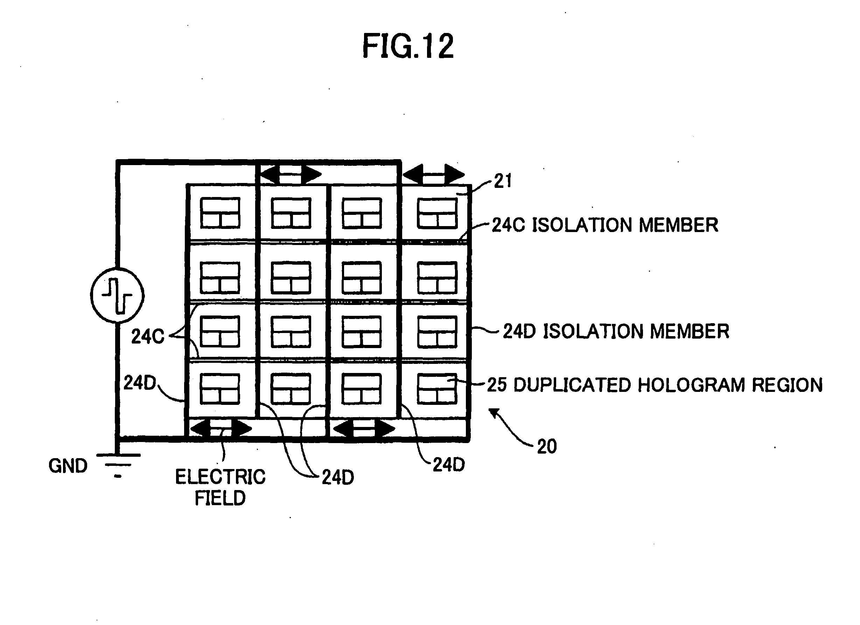

FIG. 12 is a plan view of the hologram element 20 illustrating isolation members formed from a conductive material.

The isolation members of the present embodiment can be formed from conductive materials, such as chromium, aluminum, or others.

In FIG. 12, isolation members 24C formed from non-conductive materials and isolation members 24D formed from conductive materials are provided. With a combination of the non-conductive isolation members 24C and the conductive isolation members 24D, when an alternating voltage is applied to the conductive isolation members 24D, a uniform electric field can be applied in each of the isolated regions.

As described above, because the liquid crystalline alignment of the composite material forming the recording material 21 changes depending on the direction of the applied electric field, with the voltage applied to the conductive isolation members 24D, the liquid crystalline alignment of the recording material 21 can be controlled, and it is possible to enlarge the birefringence of the liquid crystal in the recording material 21, thereby improving polarization selectivity. The strength of the electric field can be appropriately set to obtain desired birefringence.

When the isolation members 24, 24B, 24C, 24D as described above are provided, however, it becomes difficult to hold the recording material 21 between the substrates 22, 23 by vacuum injection, which is a common technique for sealing a liquid crystal.

To solve this problem, in the present invention, when sealing the recording material 21, a One Drop Fill (ODF) technique is used, which allows a tiny quantity of the liquid crystal to be applied to form the recording material 21, for example, by inkjet.

FIG. 10 is a cross-sectional view of a portion of the hologram element 20 explaining the One Drop Fill (ODF) process.

As illustrated in FIG. 10, in each of the isolated regions demarcated by the isolation members 24 on the substrate 22, an appropriate amount of the liquid crystal can be applied to form the recording material 21, thereby, reducing the number of processing steps compared to the vacuum injection technique, and improving productivity of fabricating the hologram element 20.

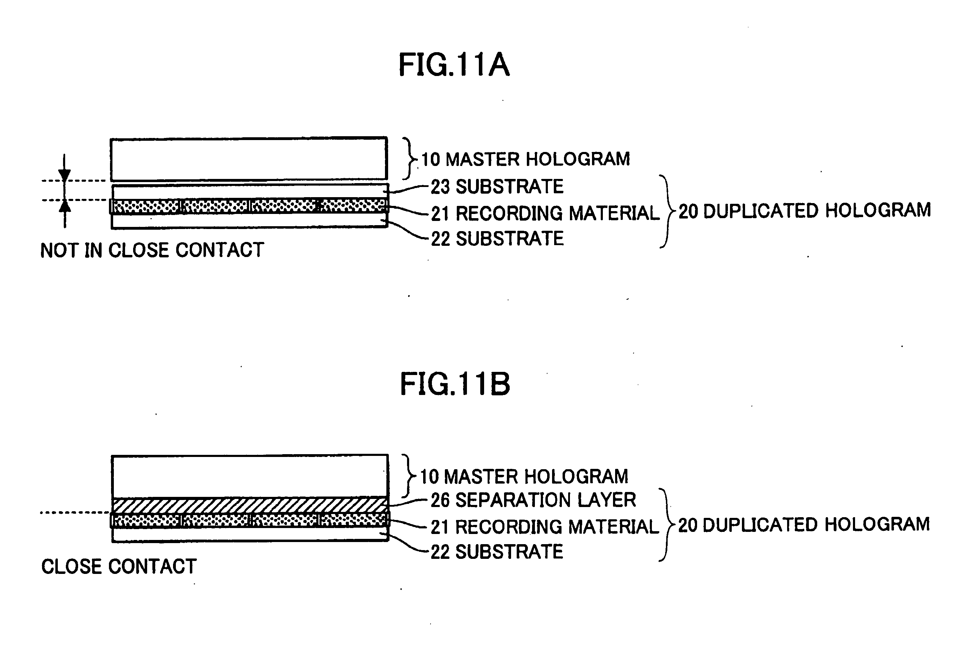

FIG. 11A and FIG. 11B are cross sectional views illustrating the contact condition between the master hologram 10 and the hologram element 20.

As illustrated in FIG. 11A, when the recording material 21 is held between the substrates 22, 23, it is difficult to set the master hologram 10 to be in close contact with the hologram element 20.

To solve this problem, as illustrated in FIG. 11B, a separation layer 26 is formed on the master hologram 10 directly to serve as a substrate for holding the recording material 21, thereby, ensuring close contact with the hologram element 20 during exposure duplication. This improves exposure accuracy.

Below, descriptions are made of examples of the hologram element of the present embodiment and methods of producing the hologram element, and examples for comparison.

### First Example for Comparison

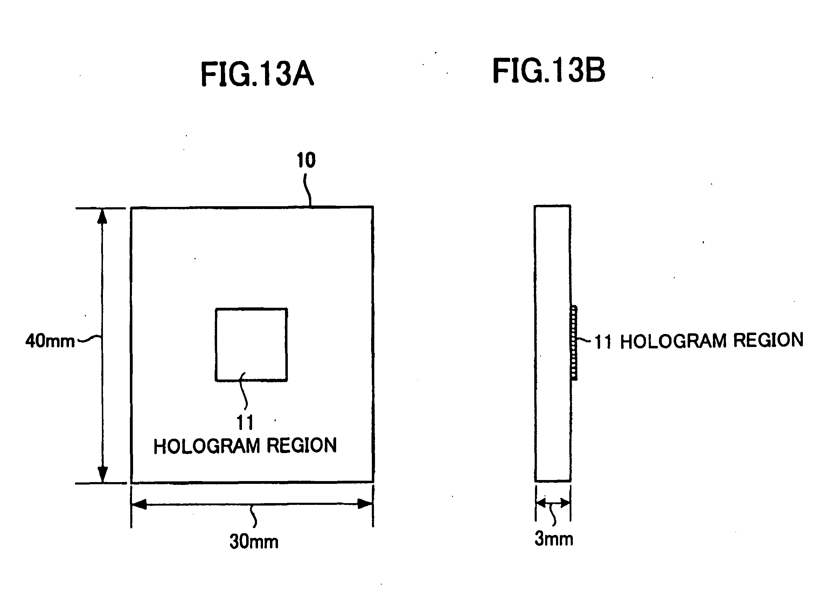

FIG. 13A and FIG. 13B are a plan view and a cross-sectional view of a master hologram produced by two-beam interference exposure using a photo resist.

When producing the master hologram 10 shown in FIG. 13A and FIG. 13B, the wavelength of the incident light is 442 nm, the ratio of the strength of the transmission light (zero-th order light) and the first order diffracted light is roughly 1: 1, and in a region where two incident beams intersect each other, an interference pattern having a period of approximately 1 µm is formed. With this master hologram 10, a hologram is duplicated in a recording material as described below (photosensitive material) by exposure.

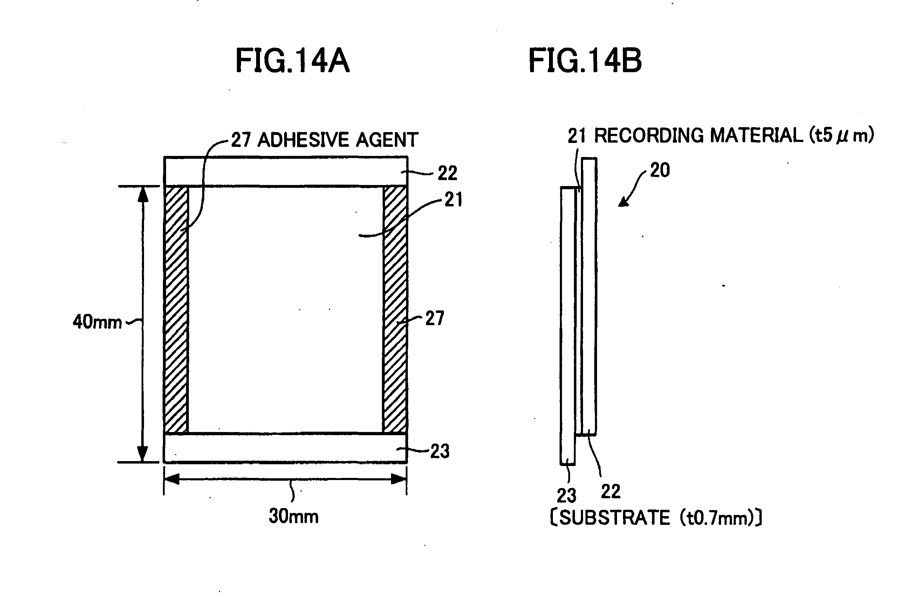

FIG. 14A and FIG. 14B are a plan view and a cross-sectional view exemplifying the hologram element 20 including a recording material sealed between two substrates.

As illustrated in FIG. 14A and FIG. 14B, in the hologram element 20, including the recording material 21 sealed between the two substrates 22, 23, the substrates 22, 23 are glass substrates each of which is 40 mm in height, 30 mm in width, and 0.7 mm in thickness. A blue light reflection prevention film is formed on one surface of each of the substrates 22, 23, and the substrates 22, 23 are bonded to each other by using an adhesive agent 27 in which bead-like spacers are mixed. The adhesive agent 27 is applied at two sites on the other surface of each of the substrates 22, 23 opposite to the reflection prevention film.

Below, a single hologram element 20 is also referred to as a "cell".

The recording material 21 is formed from a composite material including a mixture of the following materials (1) through (5).
(1) Nematic liquid crystal (manufactured by Merck & Co., product name: TL216, Δ ε >0), 30 parts by weight (or 30 w/t parts).
(2) phenyl glycidyl ether acrylate hexamethylene diisocyanate urethane prepolymer (manufactured by Kyouei Chemistry Co., product name: AH600), 75 parts by weight (or 75 w/t parts).
(3) dimethylol-tricyclodecane-diacrylate (manufactured by Kyouei Chemistry Co., product name: DCP-A), 10 parts by weight (or 10 w/t parts).
(4) hydroxyethyl methacrylate (manufactured by Kyouei Chemistry Co., product name: H0), 5 parts by weight (or 5 w/t parts).
(5) a photo polymerization, initiator based on bis-acylphoshinoxide (manufactured by Ciba-Geigy Co., product name: Irgacure 819), 1 parts by weight (or 1 w/t parts).

Specifically, the above composite material is injected into the cell by a capillary method while being heated and maintained at 60 °C, forming a composite material film about 5 µm in thickness. Because the above composite material is reactive with respect to light having a wavelength shorter than green light, it is handled with red light in a dark room.

After the composite material is injected into the cell, the composite material is isotropic at room temperature.

Next, using a He-Cd laser having output power of 80 mW and emitting a laser beam of a wavelength of 442 nm, the laser beam is emitted to the master hologram with the diameter of the laser beam being enlarged. An ND filter is adjusted so that the intensity of the laser beam transmitting through the master hologram is about 11.1 mW/cm².

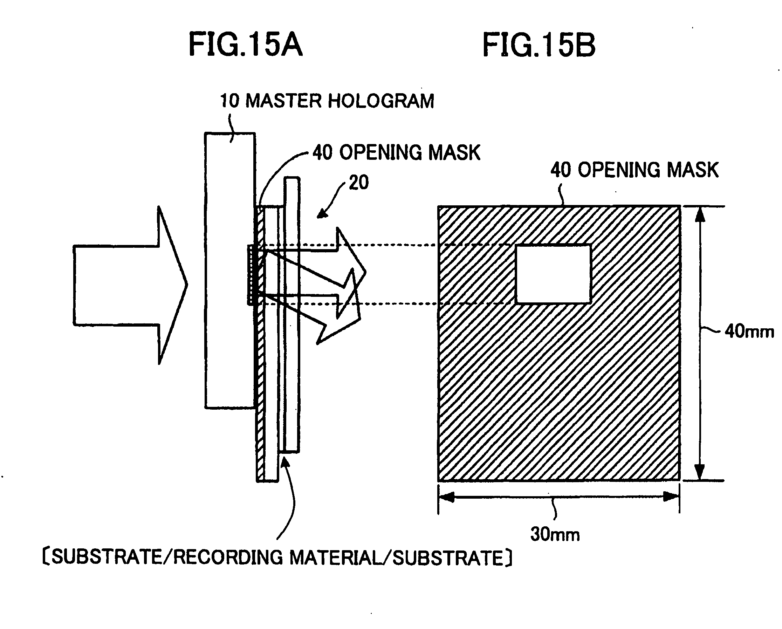

FIG. 15A and FIG. 15B are a cross-sectional view and a plan view illustrating a method of the exposure for hologram duplication with an opening mask being provided between the master hologram and the cell.

As illustrated in FIG. 15A, in the exposure for duplication, the incident light is irradiated on a structure in which the master hologram 10, an opening mask 40, and a cell 20 are arranged in order, the cell 20 including the recording material 21 held by the two substrates 22, 23.

As shown in detail in FIG. 15B, the opening mask 40 is provided between the master hologram 10 and the cell 20, and about half of the cell 20 is exposed for duplication of the master hologram 10; then the relative position between the opening mask 40 and the master hologram 10 is changed to expose the remaining half of the cell 20. That is, in the example shown in FIG. 15A and FIG. 15B, duplication of the whole master hologram 10 is completed by multiple exposure (here, twice).

In the course of exposure, the cell substrate is attached to a heater to heat and maintain the cell 20 at 60 °C, each exposure is executed for 5 minutes, and the exposure is executed twice; hence, a polarization hologram element having two hologram regions is produced.

The thus produced polarization hologram element 20 was evaluated as below.

A linear-polarized laser beam of a wavelength of 442 nm and including a P polarization component and an S polarization component was emitted to one duplicated polarization hologram element in a direction perpendicular to the substrate surface of the polarization hologram element. When the laser beam was incident to the hologram region formed in the first exposure, diffracted light depending on the polarization state of the incident light was observed, but in the hologram region formed in the second exposure, diffracted light was not observed, no matter whether the incident light is a P wave or a S wave.

### Example 1

The method shown in the present example is basically the same as that in the first example for comparison, except that an isolation member is provided.

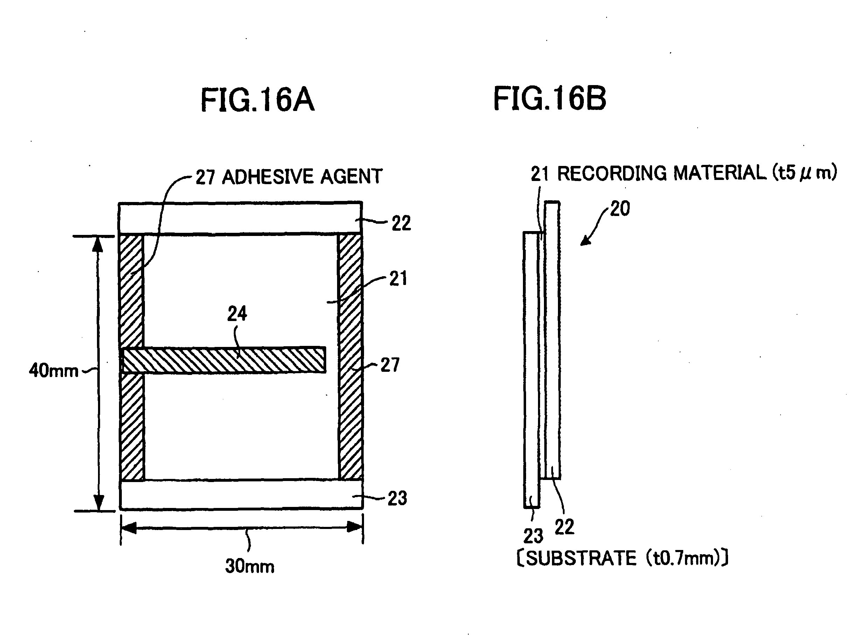

FIG. 16A and FIG. 16B are a plan view and a cross-sectional view illustrating a cell in which an isolation member 24 is provided.

As illustrated in FIG. 16A and FIG. 16B, at the center of the cell 20 (hologram element), the isolation member 24 is provided with an adhesive agent, forming two isolated regions. The adhesive agent is applied by using a pipette chip with the adhesive agent having an approximately uniform thickness at the front end of the pipette chip.

Except that two isolated regions are formed with the isolation member 24, fabrication of the cell and the exposure for duplication in the present example are the same as those in the first example for comparison.

The obtained polarization hologram element was evaluated in the same way as in the first example for comparison. In the test, diffracted light having selectivity of the polarization state of the incident light was observed in the hologram regions formed in both the first and the second exposure. That is to say, with the isolation member 24 to demarcate the recording material to form plural hologram regions (device regions), it is possible to duplicate plural polarization hologram elements with one cell.

### Example 2

In the hologram element produced in the example 1, the cell gaps in the hologram regions formed in the first and the second exposure were both 3.2 µm, which were different from a target value of 5 µm. In the example 1, the cell gaps were obtained by fitting measurement results of incident angle dependence of diffraction efficiency with theoretical values calculated by coupled wave theory.

In the present example, bead-like spacers having a diameter of 5 µm are mixed in the adhesive agent used to fix the isolation members 24, and then, fabrication of the cell and the exposure for duplication are performed in the same way as in the example 1, and the polarization hologram element 20 was produced and evaluated.

Similar to the example 1, diffracted light having selectivity of the polarization state of the incident light was observed in the hologram regions formed in both the first and the second exposure. The cell gap was 4.5 µm, which was close to the target value of 5 µm. That is, the accuracy of the cell gap was improved.

### Second Example for Comparison

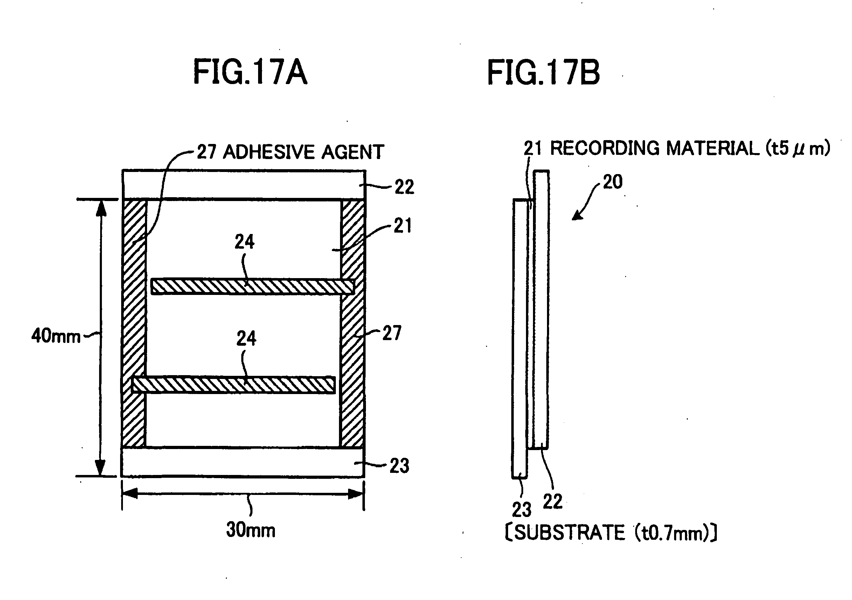

FIG. 17A and FIG. 17B are a plan view and a cross-sectional view illustrating a cell (hologram element) 20 in which plural isolation members are provided.

As illustrated in FIG. 17A and FIG. 17B, two isolation members 24 are provided in the cell 20, and three isolated regions are formed. Except for this point, the cell 20 in the present example is the same as that in the example 2. The cell 20 holding the recording material is fabricated in the same way as in the example 2. In the present example, the opening area of the opening mask 40 is reduced corresponding to the isolated regions. Exposure and duplication are performed in each isolated region, that is, exposure and duplication are performed three times.

The obtained hologram element was evaluated in the same way as in the previous examples. In the test, diffracted light was observed in the hologram regions formed in the second and the third exposure, but not observed in the hologram region formed in the first exposure.

### Example 3

The cell in the present example is the same as that shown in FIG. 17A and FIG. 17B, except that black dye is mixed in the adhesive agent, which is used for fixing the isolation members 24. That is, the isolation members 24 in the present example are able to absorb the light for exposure.

The cell 20 is fabricated in the same way as in the second example for comparison, and exposure and duplication are also performed in the same way as in the second example for comparison. The thus produced polarization hologram element 20 was evaluated, and diffracted light having selectivity of the polarization state of the incident light was observed in all of the hologram regions formed in the first, the second and the third exposure. It reveals that by including materials able to absorb the light for exposure in the isolation members 24, even when the intervals between neighboring hologram elements in the cell 20 are small, the polarization hologram elements can be duplicated correctly.

### Example 4

In the present example, similar to the example 1, the isolation member 24 is provided on one of the substrates holding the recording material 21 of the cell 21, forming two isolated regions. Then, a dispenser robot capable of variable delivery (manufactured by SONY Co.) is used to apply the recording material 21 in each of the isolated regions demarcated by the isolation member 24, as shown in FIG. 10. The recording material 21 is the same as that in the first example for comparison.

In addition, a separation layer 26 made from a fluorine-based material is formed on a surface of the master hologram 10 having the hologram regions by a tape. On the separation layer 26, a UV curable region (manufactured by Three Bond Co.) for molding lenses thereon is applied by spin-coating to a thickness of about 0.5 µm. As shown in FIG. 11B, the separation layer 26 on the master hologram 10 serves as a substrate for holding the recording material 21. Under these conditions, exposure and duplication are performed in the same way as in the example 1.

After the exposure and duplication process, the master hologram 10 and the cell 20 (hologram element) are separated, and the polarization hologram element 20 was evaluated. Similar to the example 1, diffracted light having selectivity of the polarization state of the incident light was observed.

A micrometer was used to move the duplicated hologram element 20 to measure the size of one hologram area. It was found that a large hologram region was duplicated by exposure compared to the example 1.

### Example 5

In the present example, instead of the adhesive agent in which bead-like spacers are mixed, a conductive isolation member 24 made from an aluminum film having a thickness of 5 µm is used, and the conductive isolation member 24 also serves as a spacer. The present example is the same as the example 1 except for the conductive isolation member 24. The cell holding the recording material is fabricated in the same way as in the example 1. The exposure and duplication are performed in the similar way as shown in FIG. 15A and FIG. 15B, except that an alternating electric field is applied by using a pulse generator and an amplifier.

The thus produced polarization hologram element 20 was evaluated, and it was found that the polarization selectivity was increased by 10% compared to example 1.

In the above, descriptions are made of examples of the hologram element of the present embodiment and methods of producing the hologram element, and examples for comparison. According to the present embodiment, it is possible to produce a polarization hologram element having good polarization selectivity, high light utilization efficiency, and good productivity in mass production.

It is quite effective to use the polarization hologram element of the present embodiment as a polarization splitting element of an optical header (optical pickup device), the polarization splitting element requiring a large diffraction angle because of its small size.

### Application of polarization hologram element

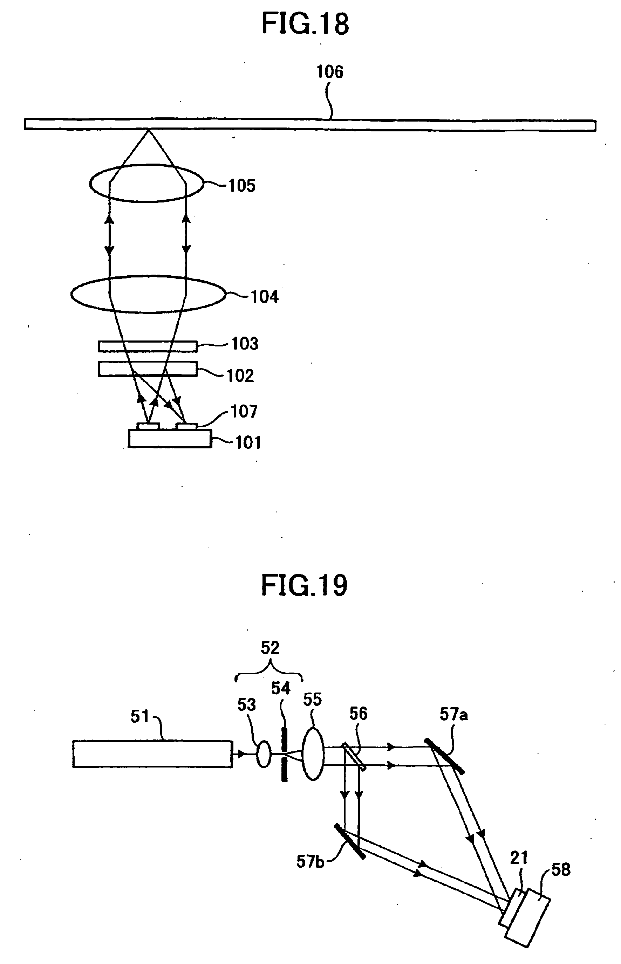

FIG. 18 is a diagram exemplifying a basic configuration of an optical header (optical pickup device) including the polarization hologram element of the present embodiment.

The optical pickup device shown in FIG. 18 includes a semiconductor laser (laser diode (LD)) 101, a polarization hologram element 102 of the present embodiment, a 1/4 wave plate 103, a collimator lens 104, an object lens 105, an optical disk 106 serving as a recording medium, and light receiving elements 107.

For example, the semiconductor laser 101 is a laser diode (LD). The polarization hologram element 102 is duplicated by the method of the present embodiment, for example, those shown in one of examples 1 through 5, and as shown in FIG. 1B, includes hologram regions sector 1 through sector 3. The light receiving elements 107 include three photo diodes PD1, PD2, and PD3, as shown in FIG. 1C.

In FIG. 18, a linearly polarized light beam emitted from the semiconductor laser 101 transmits through the polarization hologram element 102 and the 1/4 wave plate 103, is converted to a nearly parallel beam by the collimator lens 104, then is directed to the object lens 105, and is condensed by the object lens 105 onto a recording layer of the optical disk 106. The light reflected from the recording layer of the optical disk 106 is converted to a nearly parallel beam by the object lens 105, and is returned to the collimator lens 104. The returned light beam is converged by the collimator lens 104, and is directed to the 1/4 wave plate 103, which is located on both the incidence path and the exit path. When the returned light beam transmits through the 1/4 wave plate 103, the polarization plane of the returned light beam is rotated by 90°, and is incident on the polarization hologram element 102. The returned light beam is diffracted in the hologram regions (sector 1 through sector 3) of the polarization hologram element 102 in the direction toward the light receiving elements 107, and is detected by the three photo diodes PD1, PD2, and PD3 of the light receiving elements 107. From signals output from the light receiving elements 107, a recording signal, a tracking error signal, a focus error signal and other signals are extracted.

In the optical header illustrated in FIG. 18, the polarization hologram element 102 is arranged near the semiconductor laser 101 on the incidence path and the exit path, but as long as the polarization of the light emitted from the semiconductor laser 101 is along a direction in which the refractive index of the optical anisotropic region of the polarization hologram element 102 is equal to the refractive index of the optical isotropic region of the polarization hologram element 102, the polarized light from the semiconductor laser 101 transmits through the polarization hologram element 102 with little light loss, and is condensed on the recording layer of the optical disk 106.

The polarization plane of the returning light from the recording layer of the optical disk 106 is rotated by 90° by the 1/4 wave plate 103, and then the returning light is incident on the polarization hologram element 102. Therefore, if the refractive index of the optical anisotropic region is different from the refractive index of the optical isotropic region of the polarization hologram element 102, and the film thickness of the polarization hologram element 102 is set beforehand so as to result in maximum diffraction efficiency relative to the refractive index difference, it is possible to improve the diffraction efficiency. In this case, if the separation angle of the polarization hologram element 102 is greater than or equal to 15°, the polarization hologram element 102, the semiconductor laser 101, and the light receiving elements 107 can be brought into proximity with each other, and this reduces the optical path length. Here, when the separation angle is 20°, and the wavelength is 405 nm, the grating pitch of the desired diffraction grating (hologram) is approximately 1 µm.

According to the present embodiment, in the polarization hologram element 102, the grating pitch can be made very small, and on the other hand, high diffraction efficiency can be obtained.

### Second Embodiment

Below, descriptions are made of a configuration and operations of a hologram element of the present embodiment, and a method of producing the hologram element.

FIG. 19 is a view schematically illustrating an interference exposure device for producing a hologram element of the present embodiment.

The interference exposure device shown in FIG. 19 includes a semiconductor laser 51 used for exposure, a filter 52 having an object lens 53 and an aperture 54, a collimator lens 55, a half mirror 56, and mirrors 57a and 57b.

For example, a photosensitive recording material 21 is fixed on a temperature controlling stage 58, which is used to heat the photosensitive recording material 21.

The semiconductor laser 51 is a coherent light source, for example, use can be made of a Krypton (Kr) Ion Laser having an oscillation wavelength of 407 nm, a Helium-Cadmium (He-Cd) laser having an oscillation wavelength of 442 nm, an Argon (Ar) Ion Laser having an oscillation wavelength of 488 nm or 514 nm, a Helium-Neon (He-Ne) laser having an oscillation wavelength of 633 nm, a Ti: Sapphire laser having an oscillation wavelength of 870 nm, or any other coherent light source.

When the semiconductor laser 51 is a laser operating in a single longitudinal mode, the coherent length is long, and a hologram with less noise can be produced.

The filter 52 is not always necessary in the interference exposure device shown in FIG. 19. However, because the laser beam may pick up noise due to the optical elements before the half mirror 56, the filter 52 is helpful in improving the quality of the laser beam. The half mirror 56 splits the laser beam, the mirrors 57a and 57b superpose the split beams at specific angles, and an interference pattern is produced. The photosensitive recording material 21, which is a sample to be exposed, is arranged in the area of the interference pattern, and a hologram corresponding to the pitches of the interference pattern is produced.

In FIG. 19, the filter 52 and the collimator lens 55 are placed in front of the half mirror 56, but the filter 52 and the collimator lens 55 may be arranged behind the mirrors 57a and 57b, to enable interference exposure by using a converged light beam. When performing the interference exposure with a converged light beam, the convergence position in reproduction can be set.

Above, a basic structure of a two-beam interference exposure device is described as an example, but the present embodiment is applicable to an interference exposure device using three or more light beams for interference and exposure, and such an interference exposure device can be constructed by arranging plural sets of optical elements corresponding to the number of the light beams.

In the above two-beam interference exposure device, the half mirror 56, or other beam splitters, is used to split the incident beam into plural light beams (here, two light beams), and mirrors 57a and 57b or other lenses are used to adjust the interference pattern of these light beams. In this case, although depending on optical elements to be used, the exposure optical system requires a relatively large space because of limitations of specifications and arrangement, and the interference exposure device becomes large.

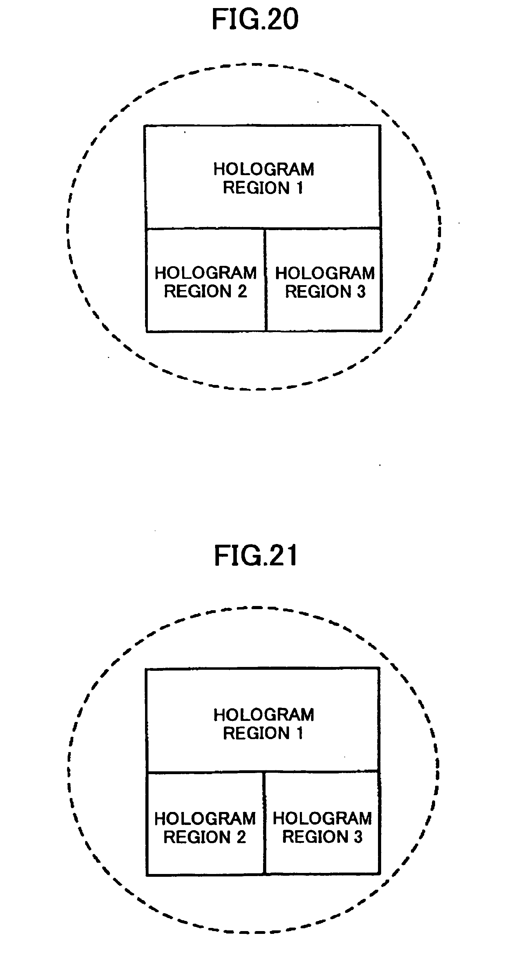

FIG. 20 is a diagram illustrating hologram regions in a single hologram element.

In a single hologram element as shown in FIG. 20, which includes plural hologram regions having different characteristics, it is required that specific interference light be irradiated to a specified region for exposure, and it is necessary to adjust the interference light in each exposure region, and to position an opening mask or make positioning adjustment with a two-axes or three axes stage in each exposure region.

FIG. 21 is a diagram illustrating a master hologram having plural hologram regions.

When performing exposure with interference light by using the master hologram as shown in FIG. 21, which is a single hologram element including plural hologram regions having different characteristics, because the interference light is generated by using the master hologram, it is not necessary to split the light beam, adjust the interference pattern, or make positioning adjustment of the opening mask. Although it is illustrated in FIG. 21 that the master hologram includes plural hologram regions having different characteristics, the same effect can be obtained even when the master hologram is not split but includes a single hologram region having single characteristics. With this configuration, the exposure optical system does not require a large space, and noise produced during exposure in adjustment of the interference pattern can be reduced, which can improve productivity of the hologram element.

As for the method of producing the master hologram, in order that the hologram exhibits desired characteristics, computers are employed to make calculations, and patterns are written on a photo mask blank plate according to the calculation results by using an electron beam writing device to produce a first master hologram; independent from this process, resin for forming a volume hologram is applied on a glass substrate to prepare a volume hologram substrate; the first master hologram produced in advance is superposed on the resin layer applied on the volume hologram substrate so that the mask surface of the first master hologram is in contact with the resin layer on the volume hologram substrate; then a laser beam is irradiated to expose the structure from the side of the first master hologram. After the exposure, ultraviolet light irradiation processing (decomposition of the photo polymerization initiator) and heating treatment (diffusion movement of photo polymerizable compounds) are performed; as a result, the first master hologram is duplicated on the resin layer applied on the volume hologram substrate. The thus duplicated hologram is used as a master hologram.

Here, it is described that electron beam lithography is used to produce the first master hologram, but other methods, such as two-beam interference exposure may be used. In addition, concerning the characteristics of the master hologram, it is preferable that the interference pattern has a high contrast ratio, and it is preferable that the master hologram for producing a diffractive gratings be designed so that the ratio of strength of the transmission light and the diffraction light, which produce the interference pattern, be roughly 1 : 1 at the exposure wavelength.

When producing the hologram of the present embodiment in large volume, as illustrated in FIG. 2 described above, the master hologram 10 is designed to have plural hologram regions 11, and the whole recording material 21 is exposed to duplicate the hologram regions 11 in the recording material 21 at one time.

Alternatively, as illustrated in FIG. 3 described above, the master hologram 10 is designed to have plural hologram regions 11, and a part of the recording material 21 is exposed to duplicate the hologram regions 11 in the recording material 21 at one time. Next, the master hologram 10 or the recording material 21, or both of them are moved to repeat exposure and duplication as above, and finally the whole recording material 21 is exposed.

Alternatively, as illustrated in FIG. 4, the master hologram 10 is designed to have one hologram region 11, the same as the method shown in FIG. 3, a part of the recording material 21 is exposed to duplicate the hologram region 11 to the recording material 21 at one time, then, the master hologram 10 or the recording material 21, or both of them are moved to repeat exposure and duplication as above, and finally the whole recording material 21 is exposed.

In the method shown in FIG. 2, because the exposure area at one time is large, very high exposure power is required, otherwise, exposure time becomes very long. In this sense, methods involving multiple times of exposure, as shown in FIG. 3 and FIG. 4, are preferable in respect to exposure power and exposure time. In addition, the master hologram having less hologram regions can be fabricated much easily.

As for characteristics of the duplicated hologram produced by exposure, high diffraction efficiency, high transparency, and good environment tolerability are desired.

Concerning the environment tolerability, it is preferable to provide protection films in the hologram regions, but formation of the protection films can be omitted by overlapping a pair of glass substrates or a pair of plastic substrates to form cells to perform exposure for producing hologram elements.

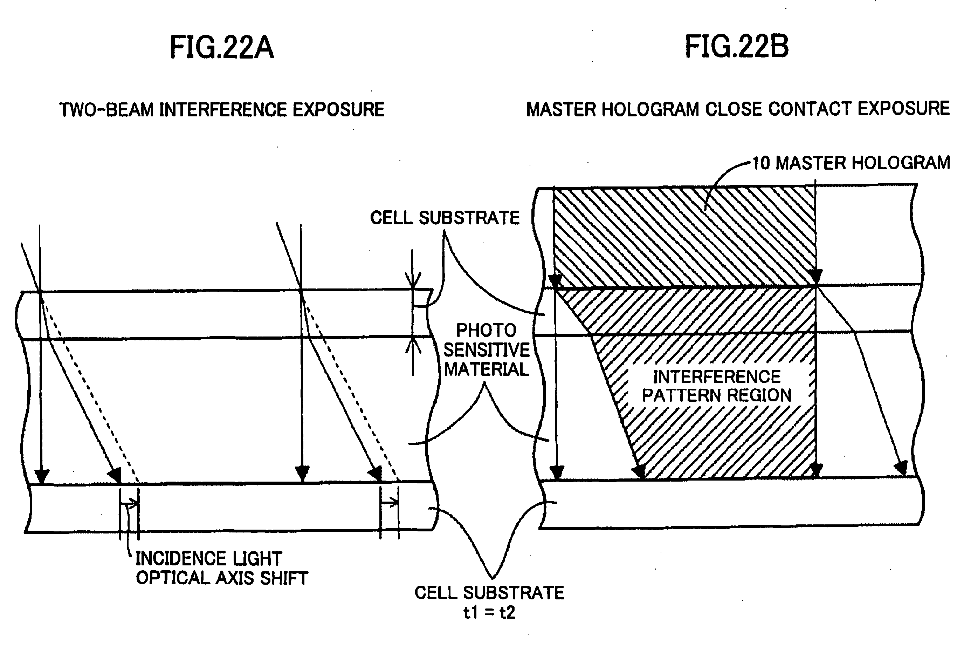

FIG. 22A and FIG. 22B are cross-sectional views of a cell including the recording material 21 held by two substrates for explaining a problem related to the thickness of the substrates when irradiating interference light for exposure.

In the aforesaid two-beam interference exposure or exposure with the master hologram in close contact, as shown in FIG. 22A and FIG. 22B, the axis of the incident light may change in the cell in accordance with the thickness of the substrate on the incident side, and this shift narrows the area to be exposed (that is, the interference formation area), as illustrated in FIG. 22B.

For example, in order to produce a grating having a pitch of 1 µm, assume one of the two light beams, which are at 442 nm, for producing the interference pattern is incident on the substrate on the incident side perpendicularly, the other beam is incident at an angle of 26° relative to the substrate, and the refractive index of the substrate is 1.5; then, the axis of the incident light in the cell shifts buy 0.55 mm, 0.20 mm, 0.13 mm, and 0.03 mm, when the thickness of the substrate on the incident side is 3 mm, 1.1 mm, 0.7 mm, and 0.15 mm, respectively. That is, the axis of the incident light changes according to the thickness of the substrate on the incident side, and the shift decreases when the thickness of the substrate becomes thin.

For a hologram diffractive element used in an optical header (optical pickup device), for example, a hologram diffractive element has a small active area (approximately 2 mm) and narrow pitches (approximately 3 µm). Because there are plural hologram regions having different characteristics in a single hologram element, due to limitations of the hologram regions, it is preferable that the thickness t1 of the incident side substrate be 0.7 mm or less, more preferably, 0.15 mm or less. These values may change depending on the pitches and area of the grating to be produced, the size of the element as a whole, or the applications of the element.

Meanwhile, it is normal to set the other substrate in the same cell but not on the incident side to have the same thickness as the thickness t1 of the substrate on the incident side (assume the thickness of the other substrate not on the incident side is t2). However, if both of the two substrates are made thin, the curing shrinkage of the photo-sensitive material 21 when duplicating the hologram becomes a problem; furthermore, durability and strength of the supplicated hologram decline. For this reason, it is desirable that the thickness t2 of the other substrate be 3 mm to 0.5 mm, and this is a typical range of the thickness of a substrate used in common optical elements or liquid crystal displays.

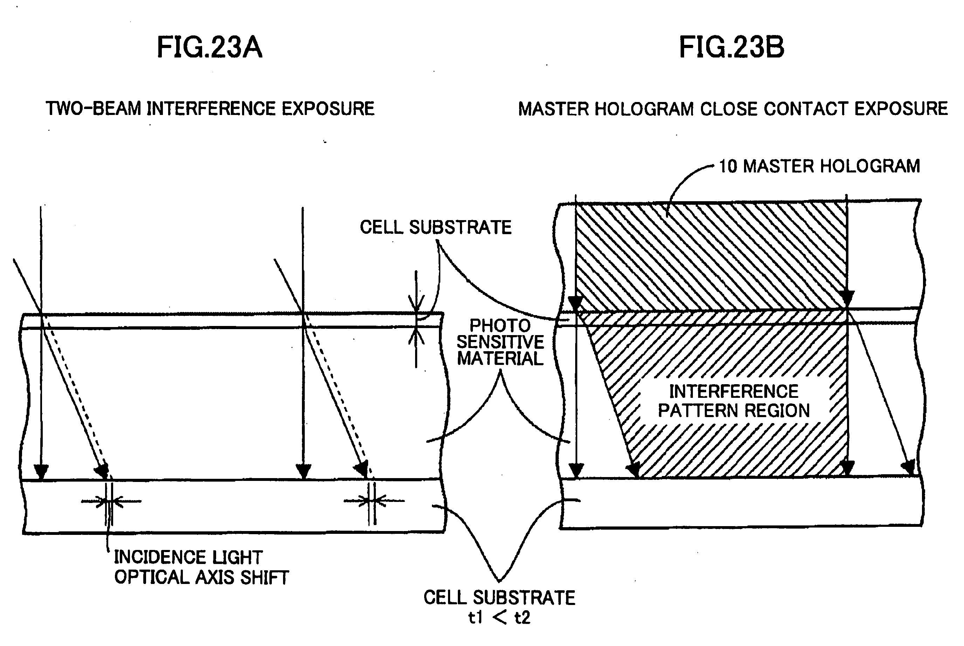

FIG. 23A and FIG. 23B are cross-sectional views of a cell including the recording material 21 held by two substrates which have different thicknesses.

To solve both the problem in shift of the incident light axis and the problem in the cell strength, in the present embodiment, as shown in FIG. 23A and FIG. 23B, the thickness t1 of the substrate on the incident side is set to be less than the thickness t2 of the other substrate in the same cell but not on the incident side. Due to this, the loss of the exposure area (interference formation area) is prevented, as illustrated in FIG. 23B.

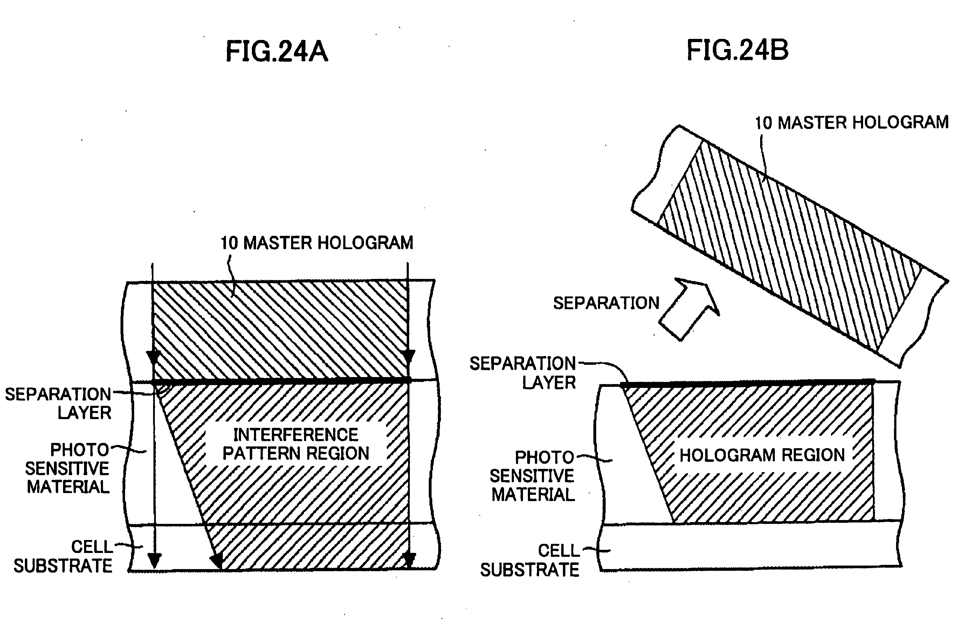

FIG. 24A and FIG. 24B are cross-sectional views of a cell illustrating exposure with interference light by using a master hologram with a separation layer being disposed between the master hologram and the recording material so as to make the master hologram, the separation layer and the recording material to be in close contact.

As illustrated in FIG. 24A, by disposing a thin separation layer between the master hologram 10 and the recording material, the separation layer serves as a protection film of the exposed hologram on the recording material, and it is possible to perform accurate exposure on the interference area from the side of the master hologram 10.

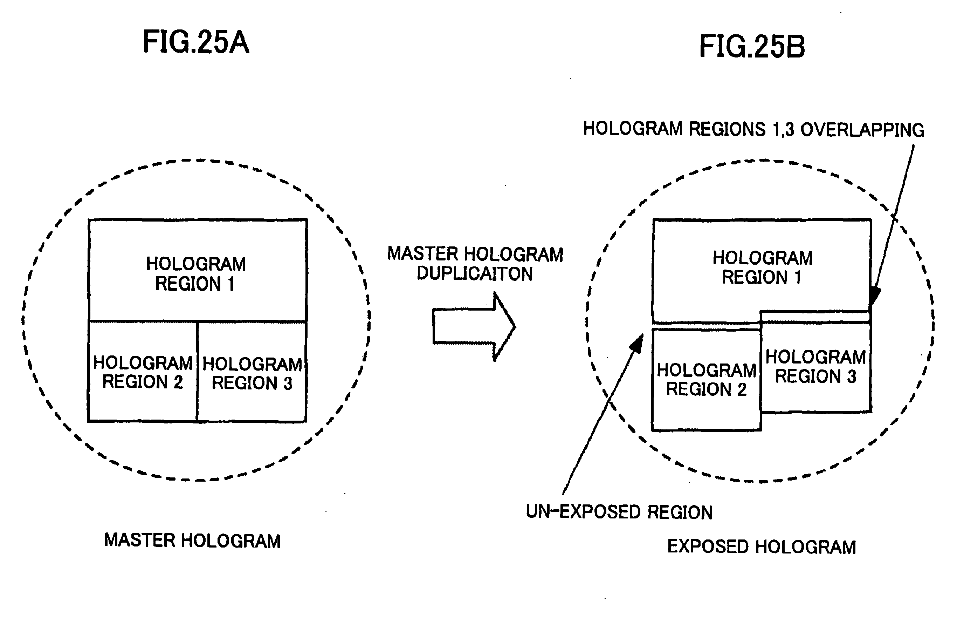

FIG. 25A and FIG. 25B are diagrams illustrating a master hologram which is a single hologram but has plural hologram regions and the duplicated hologram, respectively, for explaining the problem when using such a.master hologram to perform exposure.

As illustrated in FIG. 25A and FIG. 25B, when the master hologram is a single hologram element which has plural hologram regions having different characteristics, different hologram regions may partially overlap each other in the duplicated hologram. Specifically, in the duplicated hologram shown in FIG. 25B, a hologram region 1 overlaps a hologram region 3, and this degrades the exposure accuracy.

This deficiency can be effectively prevented by reducing the thickness of the substrate as shown in FIG. 23A and/or by disposing the separation layer on the master hologram, as shown in FIG. 24A and FIG. 24B.

When exposure with interference light is performed by using the master hologram, because the interference light is generated by using the master hologram, the hologram element fabricated with the interference light is largely affected by the master hologram. Due to this, the reproduction accuracy of the master hologram is important, and thus, when the master hologram itself generates noise light, it is required to further reduce the noise light.

Generally, a master hologram having a more complicated shape is more likely to generate noise light, and it is regarded to be difficult to eliminate the noise light completely (although sometimes it is dependent on the shape of the periodical structure dictated by the desired hologram characteristics).

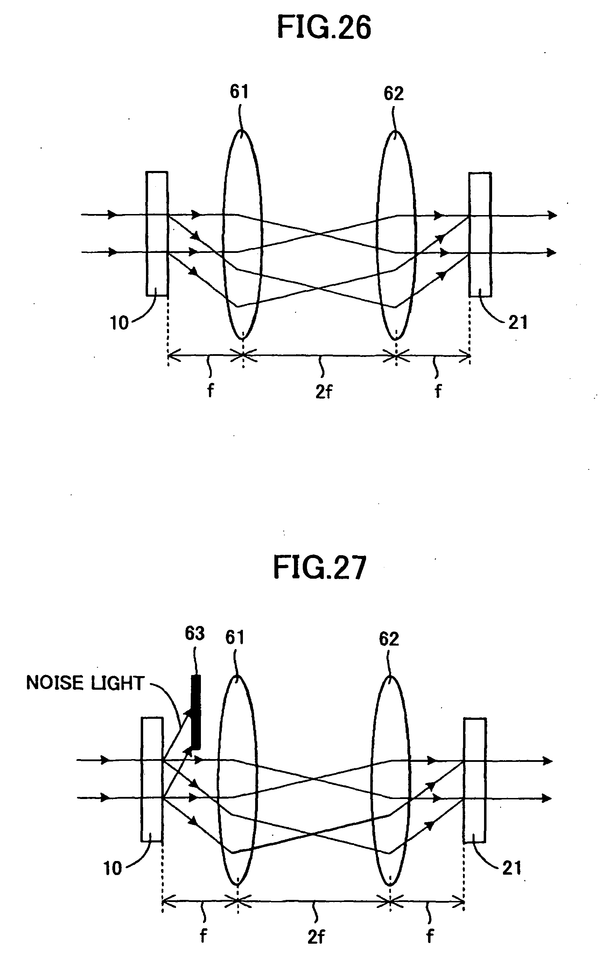

FIG. 26 is a schematic view illustrating a relay optical system used for exposure with interference light.

To eliminate the noise light when using the master hologram for exposure with interference light, a relay optical system as illustrated in FIG. 26 can be adopted.

In FIG. 26, from the side of the light source, a master hologram 10, a first lens 61, a second lens 62, and a photo-sensitive material 21 are arranged in order, the distance from the master hologram 10 to the first lens 61 is set to be the focal length f of the first lens 61, the distance from the first lens 61 to the second lens 62 is set to be the sum (2f) of the focal lengths of the first lens 61 and the second lens 62, and the distance from the second lens 62 to the photo-sensitive material 21 is set to be the focal length of the second lens 62. That is, the master hologram 10, the first lens 61, the second lens 62, and the photosensitive material 21 constitute a 4f relay optical system. According to this method, the master hologram 10 can be duplicated with very high accuracy.

FIG. 27 is a schematic view illustrating another relay optical system used for exposure with interference light.

The relay optical system in FIG. 27 is construct by adding a shielding mask 63 to the 4f relay optical system in FIG. 26.

As shown in FIG. 27, with the shielding mask 63 being arranged in the 4f relay optical system, noise light generated from the master hologram is reduced, and only the interference pattern of necessity is duplicated by exposure with interference light, so that the exposure can be performed with high reproduction accuracy of the master hologram.

When using interference light to form an interference pattern on the photo-sensitive material by means of two-beam interference exposure, interference exposure with the master hologram being in close contact, or interference exposure with the 4f relay optical system, as described in the previous embodiment, spread caused by the polymerization reaction in the recording material 21 influences the exposure and duplication processes, although the behavior of the spread depends on the exposure area (that is, the size of the hologram element to be fabricated), the interference pattern (that is, the shape of the periodic structure), exposure conditions (such as the exposure temperature, exposure quantity), and other conditions.

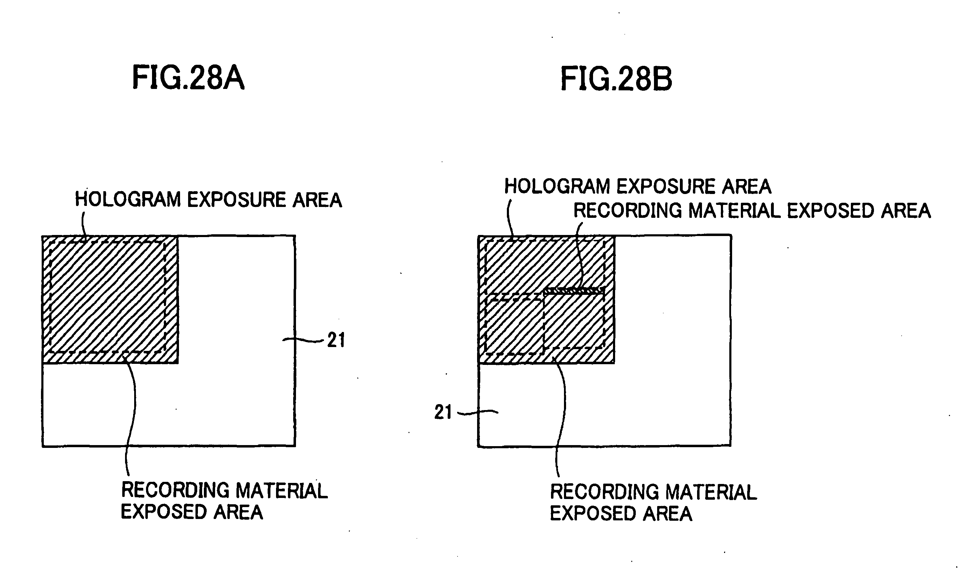

FIG. 28A and FIG. 28B schematically illustrate an exposure area on the master hologram 10 and an exposed area (an area of the cured liquid crystal) on the recording material 21, and overlapping of the exposed areas for explaining the problem of polymerization reaction spread.

As shown in FIG. 28A, because of the polymerization reaction spread, the exposed region on the recording material 21 is broader than the actual exposure area on the master hologram 10.

As shown in FIG. 28B, because of the polymerization reaction spread, the exposed region on the recording material 21 is broader than the actual exposure area on the master hologram 10. As illustrated in FIG. 28B, when the master hologram is a single hologram element including plural hologram regions having different characteristics, different exposed areas (cured areas) may partially overlap each other in the duplicated hologram.

When the exposed region on the recording material 21 is broader than the actual exposure area on the master hologram 10, or when different exposed areas overlap each other in a single hologram element, satisfactory hologram characteristics cannot be obtained in the expanded exposed region and in the overlapping exposed region, and this causes degradation of the hologram characteristics of the hologram element; thus, these areas are not desired.

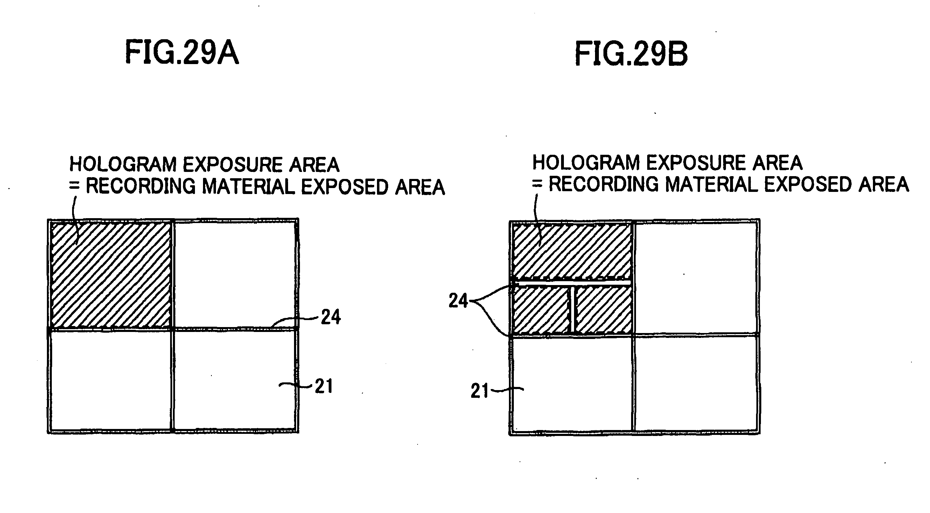

FIG. 29A and FIG. 29B show the recording material 21 for schematically illustrating the method of producing the hologram of the present embodiment.

As illustrated in FIG. 29A, isolation members 24 are provided and arranged in a matrix manner to isolate each hologram element, or as illustrated in FIG. 29B, the isolation members 24 are arranged in a matrix manner to isolate each of plural hologram regions in a single hologram element, thereby forming plural isolated regions. In this way, influence of the spread of the polymerization reaction is preventable.

For example, the isolation members 24 are light curable adhesive agents or heat curable adhesive agents, which are commonly used in liquid crystal displays or other devices. For example, the isolation members 24 can be formed by screen-printing or the like. For example, the printing plate used in the screen-printing may be a relief printing plate, a planographic printing plate, an intaglio printing plate, or a stencil printing plate; the screen printing plate can be a mimeographic plate, or a stencil plate. Specifically, silk (screen) woven with polyester or other fibers is used as the screen printing plate. This screen is stretched and fixed on a frame, a thin film (serving as a resist) of the printing plate is formed on the screen, and then with unnecessary streak eyes being blocked, the screen printing plate is completed. Printing ink (such as an ultraviolet curable one, or a thermal curable one,) is applied within a frame of the screen printing plate. When a sliding force is applied to the printing ink by a squeegee, the ink passes through a portion of the screen where the resist is not present, and is transferred to an object to be printed. By such screen printing, it is possible to print on materials of various shapes and sizes, various inks (isolation member) can be used, and further, relatively thick films (about 100 µm) can also be formed.

In this way, isolation members can be formed on the hologram substrate beforehand. It should be noted that the method of forming the isolation members of the present embodiment is not limited to the aforesaid screen-printing.

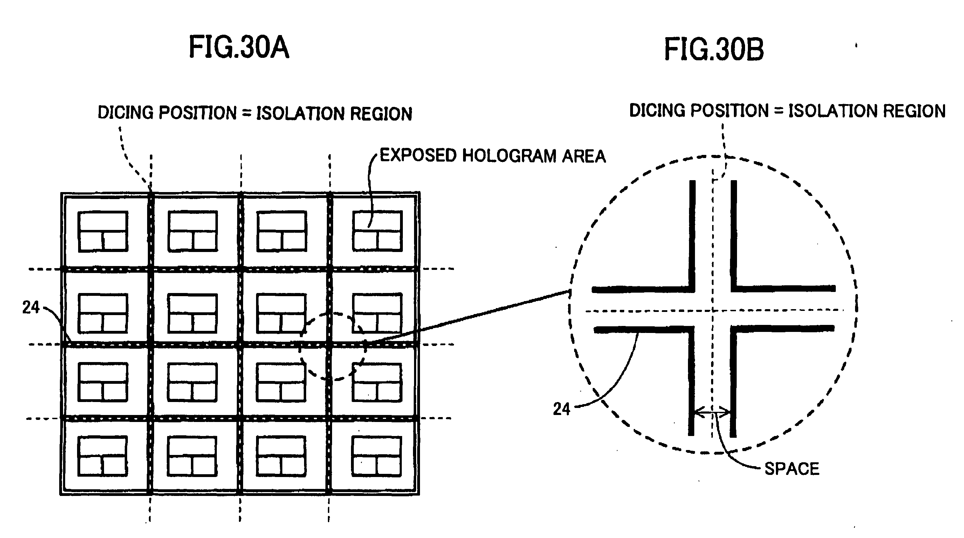

FIG. 30A is a plan view of a hologram element having plural isolated regions in the recording material.

FIG. 30B is an enlarged view of a portion of the hologram element in FIG. 30A.

As illustrated in FIG. 30A, in the duplicated recording material, the isolated regions are exposed separately to form plural hologram regions. By cutting the hologram area of the recording material at positions of the isolation portions (including the isolation members 24) by dicing or scribing, for example, the recording material is divided into plural separate hologram elements, thereby producing the hologram element of the present embodiment in large volume. When cutting the recording material by scribing, if an adhesive agent layer is present, the recording material cannot be cut successfully. In this case, as shown in FIG. 30B, it is preferable to leave a space in the isolation portion.

Below, the isolation members 24 for isolating the hologram regions are described in detail.

As described above, generally, the isolation members 24 may be light curable adhesive agents or thermal curable adhesive agents, which are common adhesive agents. For example, spherical spacers or fiber spacers used in liquid crystal displays can be mixed in the isolation members 24; thereby, the isolation members 24 can also serve as spacers to control the gap between the substrates.

For example, the isolation members 24 having functions of spacers can be formed from plastic films which can be controlled to have a certain thickness, such as polyvinyl chloride, polyimide, polystylene, polyethylene, polyethylene naphthalate, polycarbonate, and polypropylene.

For example, the isolation members 24 may be projections on the surface of the substrate fabricated by photolithography, etching, molding, or other techniques. Specifically, as for photolithography, which is generally used in semiconductor processes, first, through a mask on which a desired pattern of the isolation member is formed (for example, the mask can be a glass substrate on which a shielding pattern is formed from Cr or A1), visible light or ultra violet rays are irradiated to a substrate for exposure, on which a photo resist photo-sensitive layer is formed beforehand (this is the hologram substrate before exposure). Alternatively, without using the mask, an electron beam is used to directly write the pattern of the isolation member. Due to the exposure process, the solubility of the photo resist relative to a developing solution changes, so that in the developing step, the pattern on the mask is transferred to the photo resist. In order to ensure that the resolution of the transferred pattern will be in the order of sub-microns, it is preferable to use light of a relatively short wavelength.

The thus obtained photo resist can be used as the isolation member 24; however, from the point of view of durability or reliability, it is preferable to transfer the pattern on the photo resist to the substrate by dry etching or wet etching to form an isolation pattern on the substrate directly.

When forming the isolation members 24 by molding, by an electron beam or cutting operations, projections can be formed on the hologram substrate before exposure to serve as the isolation members. Alternatively, a mold having projections used for forming the isolation members is formed from stainless steel, nickel, or aluminum by an electron beam or cutting operations, then by means of transfer, extraction, or injection, the hologram substrate with the isolation members thereon can be formed.

A schematic cross-sectional view of the isolation members having the function of spacers is the same as that shown in FIG. 8. The thickness of the spacer can be appropriately determined so as to obtain a desired thickness of the hologram layer in accordance with variation of the refractive index related to the wavelength and the periodic structure.

Because of the isolation members 24, it is possible to prevent influence of the spread of the polymerization reaction on neighboring hologram elements. However, during exposure with interference light, light leakage occurs due to multiple reflections between the substrates holding the recording material, and this leakage imposes adverse influence on the hologram element.

As described above with reference to FIG. 9, isolation members 24B can be formed, for example, from a material capable of absorbing light having an exposure wavelength. Because of the isolation members 24B, it is possible to prevent the influence of light leakage on the neighboring hologram elements caused by multiple reflections during exposure with interference light, thereby avoiding unnecessary isolation of the neighboring hologram elements.

For example, the material of the isolation members 24B can be appropriately selected according to an object wavelength. For example, it may be chromium or chromium oxide, resins with carbon or pigments being dispersed therein, or resists with pigments being dispersed therein. The pigments may be anthraquinone-based dyes at the red wavelength region, or phthalocyanine-based pigments at the green or blue wavelength region. In addition, the material for forming a resist may be a radical polymerized photo polymer formed from a polyfunctional acrylic ester monomer, a photo polymerization initiator from trihalomethyl triazine, and a copolymer of acrylic acid and acrylic ester. But the material of the resist is not limited to these.

When the isolation members 24 are formed from conductive materials, such as chromium, aluminum, or others, when an alternating voltage is applied on the conductive isolation members 24D, a uniform electric field can be applied in each of the isolated regions.

When the photosensitive material includes compositions such as the polymer crystal or polymer dispersed crystal, which have dielectric anisotropy, the liquid crystal alignment of the liquid crystal molecules changes along the direction of the applied electric field. Therefore, with the voltage applied to the conductive isolation members 24D, the liquid crystalline alignment of the recording material 21 can be controlled to obtain desired birefringence of the liquid crystal in the recording material. The birefringence can enlarge the refractive index modulation of the periodic structure in the hologram region. As in the polarization hologram element of the first embodiment, this can improve polarization selectivity.

Next, a description is made of the photosensitive material used as the recording material. For example, the hologram recording material can be common photo sensitive materials, for example, dichromate gelatin, photo clock materials, photo thermoplastic, electro-optic crystals (for example, ferroelectric oxides, LiNbO₃, BaTiO₃ crystals), photopolymer, photo-resist, polymer liquid crystals, and polymer dispersed liquid crystals.

Dichromate gelatin can be used to record an amplitude hologram and a phase hologram. But dichromate gelatin needs developing processing, and has low environment tolerability, for this reason, it is not convenient to store a hologram made from dichromate gelatin. On the other hand, because dichromate gelatin is not granular, it causes little scattering noise, and enables very high resolution.

Typically, the photo resist is used in a relief hologram with projections and depressions on the surface, but it can also be used to produce volume holograms. General positive materials or negative materials developed in semiconductor integrated circuit fabrication can be used as materials of the photo resist. In addition, materials developed to obtain high exposure sensitivity and long-wavelength photosensitive bands can also be used, such as methacrylate polymer, acryl-based polyfunctional monomer, photo polymerization initiators, and photo-polymerizing resists composed of sensitizing dyes. With these materials, in recording by exposure, it is possible to obtain high resolution, to select exposure sensitivity and the photosensitive wavelength band in a wide region, and to obtain volume holograms having high diffraction efficiency.

The photo polymer can be used to record a refractive index modulating hologram, and a high resolution and low noise hologram can be produced with the photo polymer because the photo polymer enables high diffraction efficiency and essentially does not have granularity. The photo polymer is composed of various materials, and can be generally classified into photo-polymerized photo polymer and photo bridged photo polymer.

The photo-polymerized photo polymer includes ones requiring development, and ones not requiring development. In terms of compositions, the photo-polymerized photo polymers not requiring development can be classified into (a) polymer, monomer, (b) monomer, monomer, and (c) inactive components (low molecular), monomer. Compositions of photo polymers belonging to (a) and (c) are selected so that the difference of the refractive indexes is large between monomer polymerized materials and polymers or low molecular compounds. Photo polymers belonging to (b) are composed of two kinds of monomers having different refractive indexes, for example, the photo polymers belonging to (b) can be formed from the following combinations, such as (1) monomers having different photo polymerization capability, (2) photo polymerized monomer and thermal polymerized monomer, (3) photo radical polymerized monomer and optical cation polymerized monomer.

In the above materials, the photo polymerizable polymers, such as photopolymer or the photo resist, enable selection of resolution, exposure sensitivity, photo-sensitive wavelength band in a wide region, and superior environmental tolerability; and offer many degrees of freedom in selection of the film thickness and size. In addition, because the granularity is small, high diffraction efficiency and high transparency are obtainable, which are features of a hologram.

As for a refractive index modulating hologram, which has high diffraction efficiency, when the difference of the refractive index modulation of the periodic structure in the hologram region is large, an optimum film thickness that results in high efficiency becomes small; accordingly, the variation of the diffraction efficiency, which depends on a wavelength change or an incidence angle, can be reduced. In other words, it is possible to produce a hologram enabling high diffraction efficiency in wide ranges of wavelength and incidence angle.

As for photosensitive materials able to enlarge the difference of the refractive index modulation of the periodic structure, there are polymer liquid crystals and polymer dispersed liquid crystals having large birefringence.

The polymer liquid crystals and polymer dispersed liquid crystals may be a composite material including a polymerized liquid crystal, or a mixed composite material including a non-polymerized liquid crystal and a polymerized polymer, or a mixed composite material including a polymerized polymer and at least one of a non-polymerized liquid crystal and a polymerized liquid crystal. Specifically, the above composite material may be one of (1) a polymerized liquid crystal, (2) a mixture of a non-polymerized liquid crystal and a polymerized polymer, (3) a mixture of a polymerized polymer and a polymerized liquid crystal, and (4) a mixture of a polymerized polymer, a non-polymerized liquid crystal, and a polymerized liquid crystal. When necessary, a photo polymerization initiator may be added.

For example, the polymerized liquid crystal may be a liquid crystalline monofunctional acrylate monomer, a liquid crystalline meta-acrylate monomer, a liquid crystalline difunctional diacrylate monomer, or a liquid crystalline dimeta-acrylate monomer. These materials may include a methylene chain between the functional group of acryloyloxy and the liquid crystalline skeleton.

The non-polymerized liquid crystal may be any liquid crystal exhibiting diffractive anisotropy, having a phase structure of any one of the Nematic phase, cholesteric phase, and smectic phase. For example, well known liquid crystals can be used, for example, which have skeletons formed from one of biphenyl, tert-phenyl, phenyl-cyclohexane, biphenyl-cyclohexane, benzoic acid phenyl ester, cyclohexane carboxylic acid phenyl ester, phenyl-pyrimidine, phenyl-dioxane, tolan, 1-phenyl-2-cyclohexylethane, 1-phenyl-2-biphenylethane, 1-cyclohexylethane-2-biphenylethane, biphenyl carboxylic acid phenyl ester, or 4-cyclohexyl-benzoic acid phenyl ester, have an alkyl group, an alkoxy group, or a cyano group acting as a polarity assigning group for assigning dielectric anisotropy, and have a halogen group as a substituent group.

Preferably, the polymerized monomer or the prepolymer thereof is formed from materials having large polymerization curing shrinkage. For example, a photo-polymerizable compound having an ethylene unsaturated bond can be used as the polymerized monomer, such as a monomer, an oligomer, a prepolymer, and mixtures of them, each of which includes at least one ethylene unsaturated double bond in one molecule, and can be photo-polymerized and photo bridged.

In addition, the monomer and copolymer may also be an unsaturated carboxylic acid and unsaturated carboxylates, or an ester of the unsaturated carboxylic acid and an aliphatic polyalcohol compound, an amide of the unsaturated carboxylic acid and an aliphatic polyamine compound. Particularly, a polyfunctional monomer is preferable because it has large polymerization curing shrinkage.

The unsaturated carboxylic acid polymer may be an acrylic acid, a meta-acrylic acid, an itaconic acid, a crotonic acid, an isocrotonic acid, a maleic acid, and halogen-substituted unsaturated carboxylic acid thereof, such as chlorinated unsaturated carboxylic acid, brominated unsaturated carboxylic acid, and fluorinated unsaturated carboxylic acid.

The unsaturated carboxylate may be sodium salts and potassium salts of the above acids, and may be urethane acrylates, polyester acrylates, polyfunctional acrylates or methacrylates of epoxy resins and an acrylic acid.

Further, a thermal polymerization inhibitor or a plasticizer can be added into the above materials.

The photo polymerization initiator may be any well known one, for example, biacetyl, acetophenone, benzophenone, Michler's ketone, benzyl, benzoinalkylether, benzyldimethylketol, 1-hydroxy-2-methyl-1-phenylpropane-1-one, 2-chlorothioxanthone, methylbenzoylformate, 1-(4-isopropylphenyl)-2-hydroxy-2-methylpropane-1-one, diethoxyacetophenone, 1-hydroxycyclohexyl-phenylketone, 2,2-dimethoxy-1,2-diphenyl-ethan-1-one, α-aminoalkylphenone, bis-acylphoshinoxide, and metallocene.

The quantity of the photo polymerization initiator to be added depends on the absorption capacity of the material at the wavelength of the irradiation light, and can be appropriately adjusted according to exposure conditions in duplication.

When duplicating a master hologram by exposure with interference light, by appropriately adjusting exposure conditions, an interference pattern corresponding to the master hologram can be formed on the recording material by exposure, which is formed from composite materials as described above, and thereby forming a periodic structure on the composite material having a refractive index modulation changing with the polarization direction of incident light, that is, modulation of the refractive index in the periodical structure changes with the polarization direction of the incident light.

For example, the composite materials forming may be HPDLC (Holographic Polymer Dispersed Liquid Crystal), which is obtained by dispersing a non-polymerized liquid crystal and a photo polymerization initiator in a polymerized polymer, or may be PPLC (Photo-Polymerized Liquid Crystal), which is obtained by mixing a polymerized liquid crystal and a photo polymerization initiator.

Below, a description is made of formation of an interference pattern on the composite material by exposure.

For example, in an interference pattern formed on HPDLC, the monomer, as a component of the composite material forming the recording material, is moved to the bright portion of the interference pattern (that is, phase separation between the polymer and the liquid crystal occurs), and is polymerized and cured.

The liquid crystal, which is a component of the composite material forming the recording material, remains at the dark portion of the interference pattern, and is drawn by the polymer cured in the bright portion; thereby, the liquid crystal is aligned in a specific direction. Because of alignment of the liquid crystal, if the incident light is linearly-polarized with the polarization directions thereof being perpendicular to each other, for one polarization direction of the incident light, the refractive index of the liquid crystal is small, and the incident light is not affected by the variation of the refractive index of the liquid crystal;, hence, substantially all of the incident light transmits through the composite material of the recording material; on the other hand, for the other polarization direction of the incident light, the refractive index of the liquid crystal is large, and the incident light feels the variation of the refractive index of the liquid crystal, hence, nearly all of the incident light is diffracted. As a result, the HPDLC functions as a polarization hologram device.

When the composite material is formed from PPLC, the liquid crystal having a functional group for photo-polymerization is sealed into the space between transparent electrodes (for example, formed from ITO) and a substrate carrying an alignment layer for aligning the liquid crystal, and the liquid crystal is aligned there. When the composite material of the recording material is exposed to interference light, an interference pattern is formed on the recording material, and in the bright portion of the interference pattern on the composite material, the liquid crystal molecules are polymerized and cured. Meanwhile, in the dark portion of the interference pattern on the composite material, the state of the liquid crystal molecules remains un-cured.

A light beam is irradiated on the liquid crystal layer with a voltage being applied to the transparent electrodes sandwiching the liquid crystal layer. Due to the applied voltage, the liquid crystal in the dark portion of the interference pattern is aligned in a direction perpendicular to the substrate, and is cured due to light irradiation.

As a result, in correspondence to the distribution of the bright and dark portions of the interference pattern, a periodic structure of the liquid crystal is formed, in which the liquid crystal is aligned in the vertical direction and in the horizontal direction alternately.

When linearly-polarized incident light with the polarization directions thereof being perpendicular to each other is incident on a diffraction grating (a hologram) recorded in this way, if the incident light has a polarization direction being the same as a short axis direction of the liquid crystal molecules aligned in the horizontal direction, regardless of the periodic alignment of the liquid crystal in the vertical direction and in the horizontal direction, the incident light is not affected by the variation of the refractive index of the liquid crystal, and nearly all of the incident light transmits through the composite material; on the other hand, if the incident light has a polarization direction perpendicular to the aforesaid polarization direction, that is, the same as a long axis direction of the liquid crystal molecules aligned in the horizontal direction, the incident light is affected by the variation of the refractive index of the liquid crystal because of the periodic alignment of the liquid crystal in the vertical direction and in the horizontal direction, nearly all of the incident light is diffracted.

As described above, because of the phase separation occurring together with the polymerization reaction in the composite material, or because of the polymerization reaction and the change of the alignment due to the external electric field, it is possible to produce a polarization hologram having selective polarization.

The photo-sensitive material for recording a hologram can be formed by general methods of film formation with solutions, specifically, by spin-coating or taping on a single substrate, or by vacuum injection or capillary injection into a cell formed by a pair of substrates. In fact, as long as a uniform film can formed, which ensures that desired hologram characteristics will be obtained, the method of film formation is not limited to the above ones.

After the film of the photo-sensitive material is formed, it is preferable to form the isolated regions according to the arrangement of the isolated regions.

After the film of the photo-sensitive material is formed, the isolated regions can be formed by exposing frames of the regions to be isolated before or at the same time as the interference exposure. However, in this case, the isolation member and the photo-sensitive material have the same composition, and it is difficult to form the aforesaid spacers, light absorbing members, and the conductive members. Hence, in the present embodiment, before forming the film of the photo-sensitive material, the isolation members are used to form the isolated regions. In doing so, the accuracy of the film thickness controlled by the isolation member having functions of a spacer member is improved, and it is possible to suppress stray light caused by the light absorbing members and to apply an electric field with conductive members.

When providing the isolation members as illustrated in FIG. 30 before forming the film of the photo-sensitive material, however, it becomes difficult to form the film of the photo-sensitive material by spin coating or by injecting the photo-sensitive material between the substrates. To solve this problem, in the present embodiment, when forming the film of the photo-sensitive material, the One Drop Fill (ODF) technique is used, which allows a tiny quantity of the liquid crystal to be applied to form the film of the photo-sensitive material, for example, by inkjet, as illustrated in FIG. 10. In FIG. 10, in each of the isolated regions demarcated by the isolation members 24 on the substrate 22, an appropriate amount of the liquid crystal can be applied to form the recording material 21, thereby reducing the number of processing steps compared to the vacuum injection technique, and improving productivity of the hologram element 20.

Below, descriptions are made of examples of the hologram element of the present embodiment, methods of producing the hologram element, and examples for comparison.

### Photo-Sensitive Material

In the following examples, polymer dispersed liquid crystals are used as the photo-sensitive material. The photo-sensitive material is formed from a composite material including a mixture of the following materials (1) through (5), and the composite material is heated to about 85 °C on a hot plate with a stirrer and is stirred.
(1) Nematic liquid crystal (manufactured by Merck & Co., product name: TL216, Δ ε>0), 30 parts by weight (or 30 w/t parts).
(2) phenyl glycidyl ether acrylate hexamethylene diisocyanate urethane prepolymer (manufactured by Kyouei Chemistry Co., product name: AH600), 75 parts by weight (or 75 w/t parts).
(3) dimethylol-tricyclodecane-diacrylate (manufactured by Kyouei Chemistry Co., product name: DCP-A), 10 parts by weight (or 10 w/t parts).
(4) hydroxyethyl methacrylate (manufactured by Kyouei Chemistry Co., product name: H0), 5 parts by weight (or 5 w/t parts).
(5) a photo polymerization initiator based on bis-acylphoshinoxide (manufactured by Ciba-Geigy Co., product name: Irgacure 819), 1 parts by weight (or 1 w/t parts).

### Cell for Recording Hologram

### <Cell of the Related Art (Without Isolation Member)>

A blue light reflection prevention film is formed on one surface of each of two glass substrates, each of which is 40 mm in height, 30 mm in width, and 0.7 mm in thickness. The glass substrates are bonded to each other by using a UV curable adhesive agent in which bead-like spacers each having a diameter of 5 µm are mixed. The adhesive agent is applied at two sites on the other surface of each of the glass substrates opposite to the reflection prevention film.

Specifically, the photo-sensitive material is injected into the cell by a capillary method while being heated and maintained at 60 °C on the hot plate, forming a photo-sensitive material film having a thickness of about 4 to 5 µm. After being injected into the cell, the photo-sensitive material is isotropic at room temperature. Because the photo-sensitive material is reactive with respect to light having a wavelength shorter than green light, it is handled with red light in a dark room. This cell has the same structure as that shown in FIG. 14A and FIG. 14B.

### <Cell of Present Embodiment (With Isolation Member)>

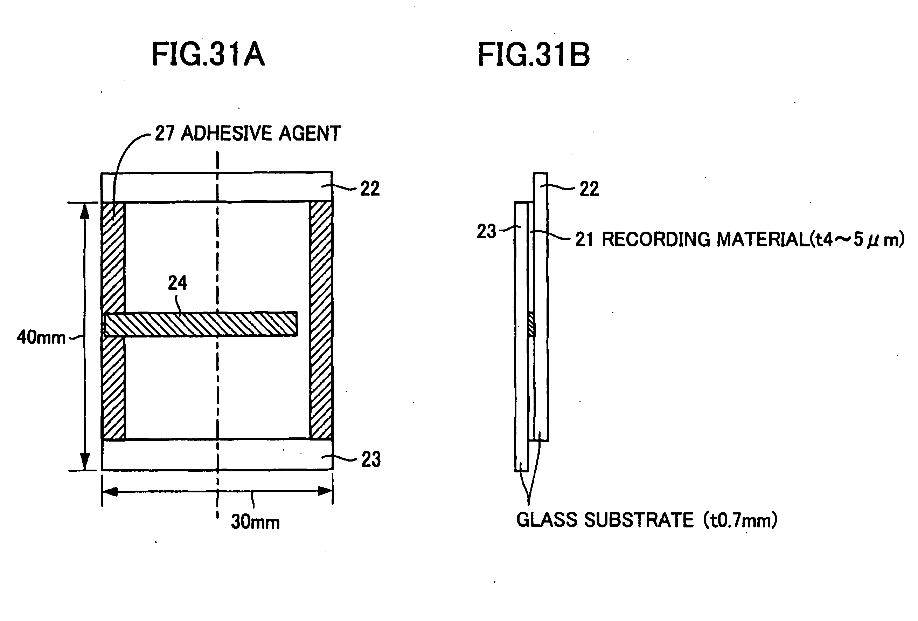

FIG. 31A and FIG. 31B are a plan view and a cross sectional view exemplifying a cell of the present embodiment.

As illustrated in FIG. 31A and FIG. 31B, a blue light reflection prevention film (not illustrated) is formed on a surface of a glass substrate, which is 40 mm in height, 30 mm in width, and 0.7 mm in thickness. At the center of the cell, a UV curable adhesive agent 27 is applied, in which bead-like spacers each having a diameter of 5 µm are mixed, and an isolation member 24 is attached to the glass substrate with the adhesive agent 27, forming two isolated regions. The adhesive agent 27 is applied by using a pipette chip with the adhesive agent 27 roughly having a uniform thickness at the front end of the pipette chip. After the isolated regions are formed, two glass substrates are bonded to each other by using a UV curable adhesive agent 27 to form a cell.

Specifically, the photo-sensitive material 21 is injected into the cell by a capillary method while being heated and maintained at 60 °C on a hot plate, forming a photo-sensitive material film having a thickness of about 4 to 5 µm. After being injected into the cell, the photo-sensitive material exhibits isotropy at room temperature. Because the photo-sensitive material is reactive with respect to light having a wavelength shorter than green light, it is handled with red light in a dark room. The structure of the cell is shown in FIG. 31A and FIG. 31B.

### Exposure with Interference Light

### <Two-Beam Interference Exposure>

Next, using a He-Cd laser having output power of 80 mW and emitting a laser beam of a wavelength of 442 nm, a two-beam interference exposure device as shown in FIG. 19 is constructed.

A laser beam from the semiconductor laser 51 is magnified by the filter 52 including the object lens 53 (magnification: 40) the aperture 54 (diameter φ5 µ m), and the collimator lens 55 (achromatic lens, focal length: 100 mm), after the incident light beam is converted to a parallel beam at power of about 10 mW/cm², the light beam is split into two beams. The mirrors 57a and 57b are arranged to deflect the two light beams, respectively, and render the two deflected light beams to intersect each other at an angle of 26° . With this wavelength and this intersecting angle, an interference pattern having a pitch of 1 µm is formed in the intersecting area of two beams. Due to the two-beam interference exposure, the grating formed inside a hologram is inclined by about 81.7° relative to the surface of the substrate.

The cell for recording a hologram, in which the recording material 21 is sealed, is mounted on a heater, is heated to a specified temperature, and at this temperature the two-beam interference exposure is performed for about five minutes, thereby producing a hologram element. In order to prevent influence from dust and air flow, the two-beam interference exposure device is enclosed by an acryl plate. During the exposure, the ambient temperature is 25 °C.

The exposure temperature during the two-beam interference exposure is set to be an optimum temperature that results in a maximum refractive index modulation (Δn_{H}) of the periodic structure in a certain polarization plane. Here, the exposure temperature is 65 °C.

The refractive index modulation (Δn_{H}) of the hologram is calculated by a method described below in evaluation of the performance of the hologram element.

### <Interference Exposure with Master Hologram>

A master hologram produced with a photo resist and two-beam interference exposure is obtained, which has the same structure as that in FIG. 13.

With a laser beam of 442 nm being incident perpendicularly, the diffraction efficiency of the master hologram with respect to the +1st order light is about 30%, and the ratio of strength of the transmission light (0-th order light) and the +1st order diffracted light is about 1.5 : 1. The remaining 25% of light utilization efficiency corresponds to scattering, absorption, reflection and other loss of light, and noise light such as the -1st order light and higher order diffracted light. In the intersecting area of the transmission light (0-th order light) and the +1st order diffracted light from the master hologram, an interference pattern having a pitch of 1 µ m is formed.

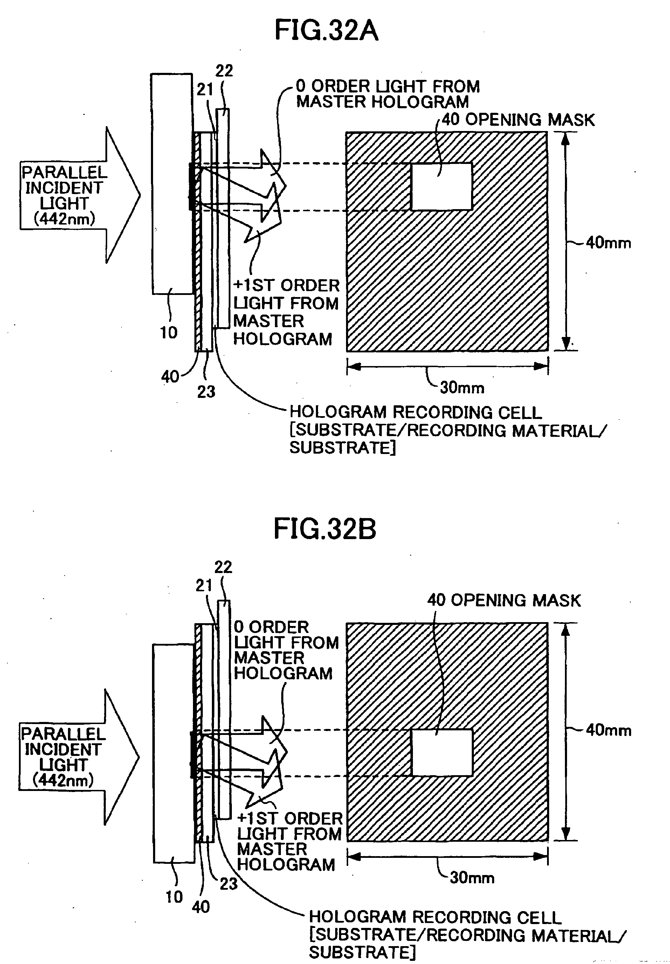

FIG. 32A and FIG. 32B are a cross-sectional view and a plan view illustrating a method of exposure for hologram duplication with an opening mask being disposed between the master hologram and the cell.

In this example, the exposure is performed with the optical system shown in FIG. 32A. With one beam being shielded in the two-beam interference exposure device as shown in FIG. 19, the other beam is adjusted to have strength of 30 mW/cm², and each of the two beams has strength of 10 mW/cm² on the cell.

The same as the two-beam interference exposure, the exposure time is about five minutes, and the exposure temperature is 65 °C. The master hologram 10 and the cell are brought into close contact with each other by using plate springs for interference exposure.

### <Exposure with 4f Relay Optical System>

A 4f relay optical system as shown in FIG. 26 is constructed. The master hologram 10 is formed in the same way as above, the first lens 61 and the second lens 62 for forming an image are formed from two camera lenses having a focal length of 50 mm (manufactured by Pentax Co., 35 mm manual lens for single-lens reflex use). Higher order diffracted light from the master hologram 10 is deflected out of the diameter of the lens, and the -1st order diffracted light is shielded by a mask, hence there is no noise light at the imaging position. At the imaging position, exposure strength of one light beam is adjusted to be about 10 mW/cm², the exposure time is about five minutes, and the exposure temperature is 65 °C.

### Evaluation of Hologram Element

When evaluating the hologram element produced as described above, a linearly-polarized laser beam at 442 nm is incident on the hologram element, and the strength of the +1st order diffracted light is measured.

An ND filter is adjusted so that the strength of the incident light is about 10 mW, and incident angle dependence of the diffraction efficiency is measured with the substrate surface of the hologram element being able to rotate in a range of ±20° relative to the normal direction of the substrate surface of the hologram element. Comparing the measurement results of the incident angle dependence of diffraction efficiency with theoretical results calculated by coupled wave theory by Kogelnik, the refractive index modulation Δn_{H} of the periodical structure of the hologram element is calculated.

Further, a linear-polarizing plate and a half-wave plate are provided in the incidence light path to rotate the optical axis of the half-wave plate by 45° , thereby, changing the polarization direction (p polarization component and s polarization component) of the light incident on the hologram element. With this configuration, polarization selectivity of the +1st order diffracted light is measured. In this case, the p polarization component is perpendicular to the direction of the stripes of the interference pattern formed in the interference exposure, and the s polarization component is along the direction of the stripes of the interference pattern.

The hologram elements produced as described so far in the present embodiment have similar characteristics, which are summarized below.

With the film thickness of the photo-sensitive material being in the range from 3.8 µm to 4.6 µm, correspondingly, the refractive index modulation (Δn_{H}) is in the range from 0.078 to 0.11, the diffraction efficiency of the +1st order light (p polarization component) is in the range from 78.0% to 81.0%, the diffraction efficiency of the 0-th order light (s polarization component) is in the range from 94.0% to 96.0%, and the polarization selectivity is in the range from 0.0% to 0.4%.

### Productivity of Hologram Element

Plural hologram regions are formed in the cell for recording a hologram in order to improve productivity of the hologram element. The method illustrated in FIG. 32 is used to form the plural hologram regions in the cell. As shown in FIG. 32A, the opening mask 40 is provided between the master hologram 10 and the cell, and a portion of the cell is exposed in one exposure; then the relative position between the opening mask 40 and the master hologram 10 is changed to expose another portion of the cell in another one exposure, as shown in FIG. 32B. In this way, plural hologram regions are formed in one cell.

### Example for Comparison

Using the cell of the related art as shown in FIG. 14, which has no isolation members, exposure is performed twice by using the opening mask 40, and plural hologram regions are formed in the cell with two-beam interference exposure, master hologram exposure, and exposure with the 4f relay optical system, respectively.

The thus produced polarization hologram element was evaluated as below. A linear-polarized laser beam at 442 nm and including a P polarization component and a S polarization component was emitted X to the hologram element in a direction perpendicular to the substrate surface of the element. When the laser beam was incident on the hologram region formed in the first exposure, diffracted light depending on the polarization state of the incident light was observed, but in the hologram region formed in the second exposure, diffracted light was not observed, no matter whether the incident light is a P wave or a S wave.

### Example 1

Using the cell of the present embodiment as shown in FIG. 31, which has isolation members and thus isolated regions, exposure is performed twice by using the opening mask 40, and plural hologram regions are formed in the cell with two-beam interference exposure, master hologram exposure, and exposure with the 4f relay optical system, respectively.

The thus produced polarization hologram element was evaluated. A linear-polarized laser beam at 442 nm and including a P polarization component and a S polarization component was emitted to the hologram element in a direction perpendicular to the substrate surface of the element. Diffracted light having selectivity of the polarization state of the incident light was observed in the hologram regions formed in both the first and the second exposures. That is to say, with the isolation member to demarcate the recording material to form plural hologram regions (device regions), plural hologram regions can be formed in one cell.

In addition, the cell is cut by dicing at positions of the isolation members to divide the plural hologram regions in the cell into two separate hologram elements. These two hologram elements were evaluated by irradiating the same linear-polarized laser beam. It was found that diffracted light having polarization selectivity was observed in both of the hologram elements. Hence, the productivity of the hologram elements is improved.

### Example 2

In the hologram elements produced in the example for comparison and example 1, the cell gaps in the hologram region formed in the first exposure were deduced by fitting measurement results of incident angle dependence of diffraction efficiency with theoretical values calculated by the coupled wave theory. It was found that in the hologram element produced in the example for comparison, the cell gap was about 3.8 µm, while the cell gap in the example 1 was about 4.6 µm. Because the beads mixed in the adhesive agent used for fixing the isolation member are 5 µm in diameter, the target value of the cell gap is 5 µm. It reveals that the accuracy of the cell gap was improved when isolation regions are formed.

### Example 3

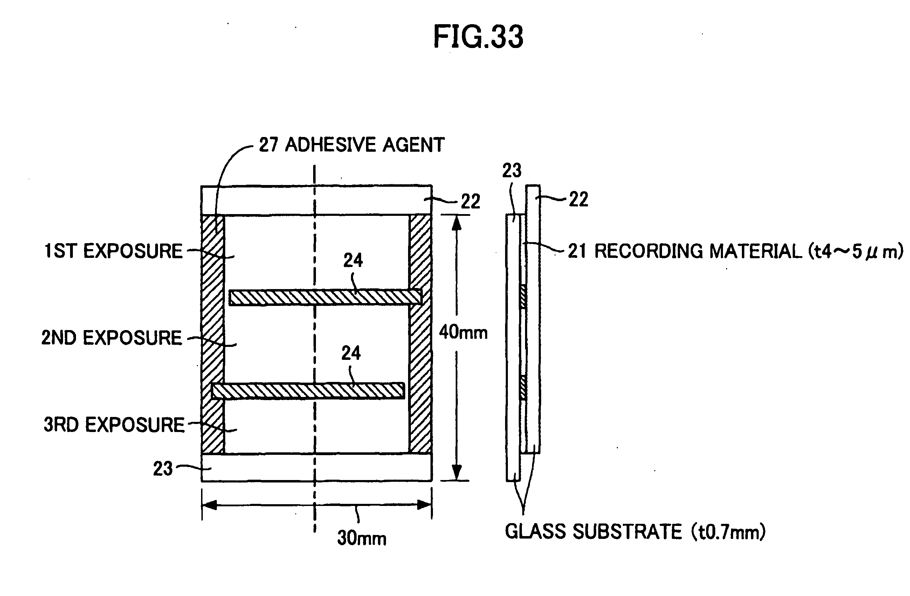

FIG. 33 shows a plan view and a cross-sectional view of a cell including three isolation regions.

As illustrated in FIG. 33, two isolation members 24 are provided in the cell, and three isolated regions are formed. Except for this point, the cell in the present example is the same as that in the example 1. Specifically, the cell in the present example is fabricated in the same way as in the example 1.

In the present example, the opening area of the opening mask 40 is reduced corresponding to the isolated regions. Exposure and duplication are performed with two-beam interference exposure in each isolated region, that is, exposure and duplication are performed three times.

The thus obtained hologram element was evaluated in the same way. It was found that the diffraction efficiencies of the hologram regions formed in the first, second, and third exposure were different, and the hologram regions formed later showed low diffraction efficiency. This could be ascribed to scattering light during the interference exposure or multiple reflection on the interface of the substrate.

To improve performance of the hologram element, black dye is mixed in the adhesive agent used for fixing the isolation members. That is, the isolation members in the present example can absorb light. Then, the cell is fabricated again and two-beam interference exposure is performed again.

The three hologram regions were evaluated again. It was found that the diffraction efficiencies of the hologram regions formed in the first, second, and third exposure were nearly the same, and performance of the hologram regions is stable regardless of the exposure timing.

In the present example, because the isolation member is formed from a material capable of absorbing the light used for exposure, it is possible to prevent unnecessary light; as a result, exposure of one isolated region can be performed without affecting neighboring isolated (un-exposed) regions. Due to this, the isolated region can be made small, and this can improve productivity of the hologram element.

### Example 4

In the present example, similar to the example 1, a hologram recording cell is fabricated which includes isolated regions being the same as the example 2, and the photo-sensitive material is injected into the cell by vacuum injection. This process of fabricating the cell with the photo-sensitive material being sealed therein took about 45 minutes.

As another way of sealing the photo-sensitive material, the isolation member is arranged on one of the substrates holding the photo-sensitive material of the cell, and forms isolated regions. Then, a dispenser robot capable of variable delivery (manufactured by SONY Co.) is used to apply the recording material in each of the isolated regions demarcated by the isolation member, as shown in FIG. 10. Then, two substrates 22, 23 are bonded together.

This process of fabricating the cell with the photo-sensitive material being sealed therein took about 15 minutes.

That is, the fabrication time can be greatly shortened by applying the recording material in the isolated regions appropriately to form a film between the substrates.

### Example 5

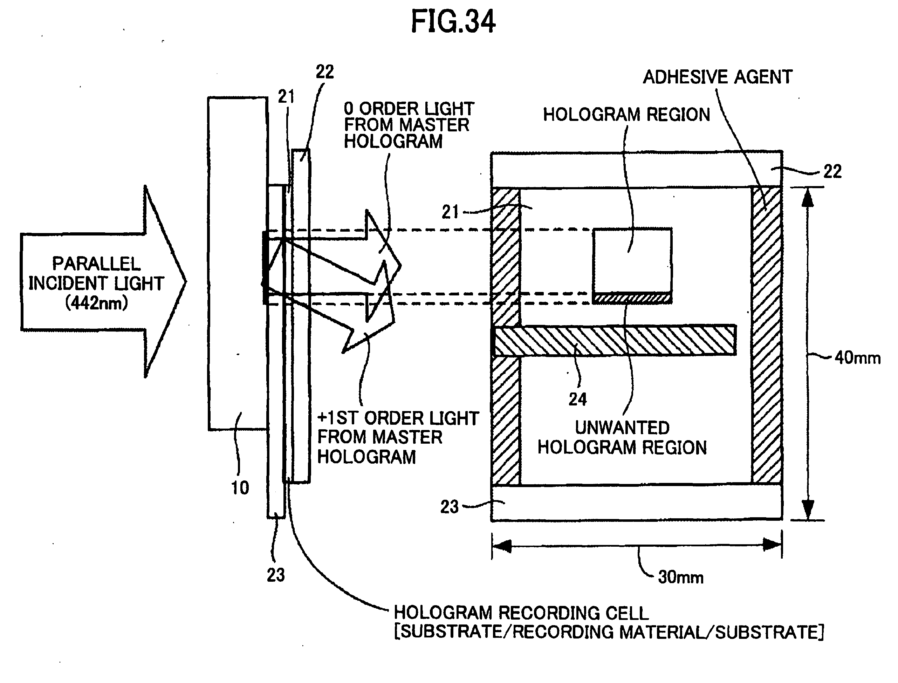

FIG. 34 shows a cross-sectional view and a plan view of a cell for explaining a problem when sealing the photo-sensitive material between two substrates to perform interference exposure with a master hologram.

In interference exposure with the master hologram 10, after the aforesaid cell is exposed with the interference light, as shown in FIG. 34, an un-usable hologram region appears at the end of the duplicated hologram region. This un-usable hologram region is affected by the substrate thickness of the cell.

To solve this problem, a separation layer made from a fluorine-based material is formed on a surface of the master hologram 10 with the hologram regions being disposed by a tape. On the separation layer a UV-curable material (manufactured by Three Bond Co.) for molding lenses is applied by spin-coating to a thickness of about 2 µm.

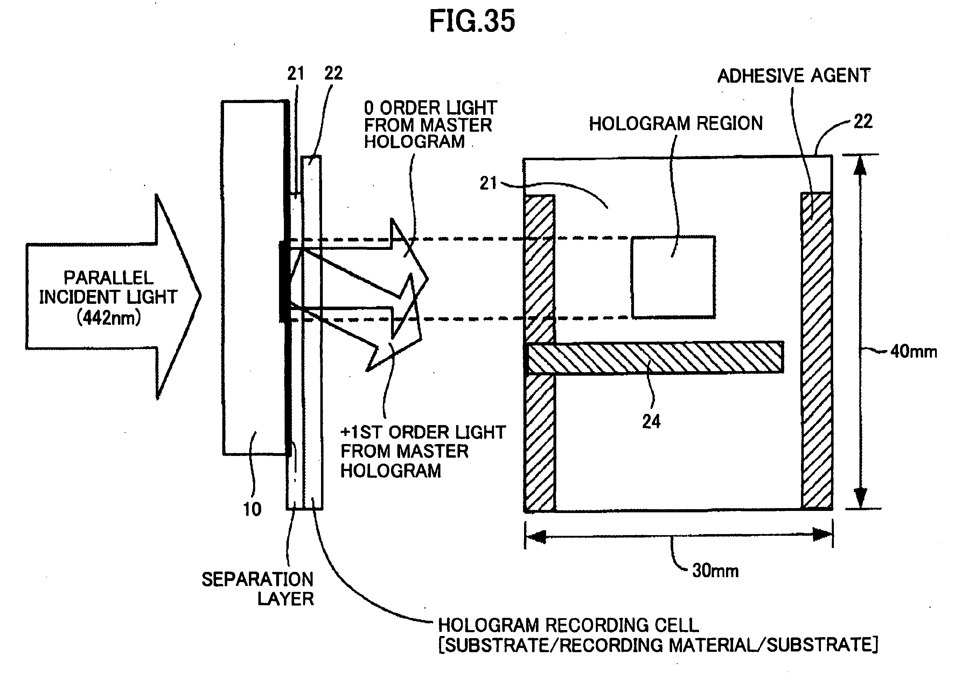

FIG. 35 shows a cross-sectional view and a plan view of a cell including a separation layer for sealing the photo-sensitive material.

As shown in FIG. 35, the separation layer on the master hologram 10 serves as a substrate for holding the recording material 21. Under these conditions, exposure and duplication are performed. After the exposure and duplication process, the master hologram 10 and the cell are separated, and as shown in FIG. 35, the un-usable hologram region disappears at the end of the duplicated hologram region.

A stage with a micrometer was used to move the duplicated hologram element to measure the size of one exposed and duplicated hologram region. It was found that a large hologram region was duplicated by exposure when the separation layer was provided.

The thus exposed and duplicated hologram regions were evaluated, and diffracted light having polarization selectivity was observed in all of the hologram regions.

### Example 5

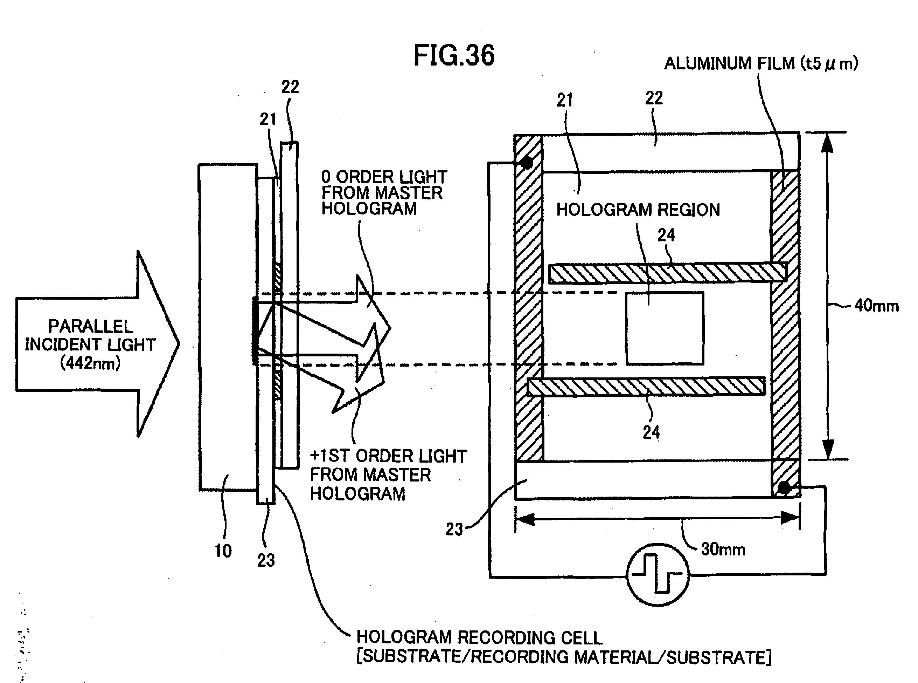

FIG. 36 shows a cross-sectional view and a plan view of a cell including conductive isolation members.

In the present example, instead of the adhesive agent in which bead-like spacers are mixed, a conductive isolation member made from an aluminum film having a thickness of 5 µm is used. The present example is the same as the example 3 except for the conductive isolation member. Exposure and duplication are performed in the way as shown in FIG. 36. During exposure, an alternating electric field is applied on the Al films of the cell by using a pulse generator and an amplifier (±150 V, 1 kHz, a rectangular signal).

The thus produced hologram element was evaluated, and it was found that the refractive index modulation increased compared to the hologram element of example 3.

According to the present embodiment, because the hologram element is produced by exposure of an interference pattern by using two or more light beams, or by using a master hologram, it is possible to produce a hologram element with good productivity in mass production, and it is possible to produce a hologram element having good polarization selectivity and high light utilization efficiency.

In addition, the hologram element of the present embodiment is applicable to an optical header (optical pickup device) for recording or reproducing information in a recording medium such as an optical disk or a magneto-optical disk, and preferably, the hologram element of the present embodiment can be used as a polarization splitting element which has polarization selectivity and is used to make an optical header compact. Further, the hologram element of the present embodiment can be used as a polarization splitting element in a projection display device for improving light utilization efficiency of illumination light, or can be used as an optical switch for switching the light path of the incident light beam depending on the polarization plane of the incident beam.

While the present invention is described above with reference to specific embodiments chosen for purpose of illustration, it should be apparent that the invention is not limited to these embodiments, but numerous modifications could be made thereto by those skilled in the art as defined in the appended claims without departing from the basic concept and scope of the invention as defined in the appended claims.

## Claims

1. A method of producing a hologram element with interference light from a film of photo-sensitive recording material (21) to correspond to a duplication of a master hologram, comprising the steps of:
forming a matrix-shaped plurality of isolated regions of the photo-sensitive recording material by using an isolation member (24), wherein a plurality of device portions are each formed within a respective isolation region; and
exposing the plurality of isolated regions on the recording material (21) to interference light to form the duplication of the master hologram;
cutting the plurality of device portions at a position along the isolation member (24) so as to divide the device portions into separate hologram elements.

2. A method as claimed in claim 1, wherein the isolated regions isolate one hologram element in each of a plurality of areas.

3. A method as claimed in claim 1, wherein the isolated region corresponds to at least the area of one hologram element.

4. A method as claimed in claim 1, wherein
the recording material (21) is held between a pair of substrates (22, 23), each of a plurality of device portions is isolated by the isolation member (24), and
the isolated region is formed in such a way that the device portions are arranged in a matrix manner.

5. A method as claimed in claim 1, wherein the interference light is generated by two or more light beams.

6. A method as claimed in claim 1, wherein the interference light is generated by using the master hologram.

7. A method as claimed in claim 6. wherein a separation layer is formed on the master hologram.

8. A method as claimed in claim 6, wherein the interference light is processed by using a relay optical system.

9. The method as claimed in claim 1, wherein the photo-sensitive recording material film (21) is formed between a pair of substrates (22, 23), one of said substrates being thinner than the other one of said substrates.

10. A method as claimed in claim 1, wherein the recording material (21) is formed from a composite material including a polymerized polymer.

11. A method as claimed in claim 1, wherein the recording material (21) is formed from a composite material including a polymerized liquid crystal.

12. A method as claimed in claim 1, wherein the recording material (21) is formed from a mixed composite material including a non-polymerized liquid crystal and a polymerized polymer.

13. A method as claimed in claim 1, wherein the recording material (21) is formed from a mixed composite material including a polymerized polymer and at least one of a non-polymerized liquid crystal and a polymerized liquid crystal.

14. A method as claimed in claim 10, wherein the recording material (21) is exposed to the interference light to induce a polymerization reaction and phase separation of the composite material so as to form a periodic structure.

15. A method as claimed in claim 14, wherein a refractive index modulation of the periodic structure varies with a polarization direction of an incident light.

16. A method as claimed in claim 1, wherein the isolation member (24) also acts as a spacer for controlling a film thickness of the recording material.

17. A method as claimed in claim 1, wherein the isolation member (24) is formed from a material capable of absorbing light of a wavelength of the light for exposure.

18. A method as claimed in claim 1, wherein the film of the recording material (21) is formed in regions defined by the isolation member (24) by a One Drop Fill (ODF) process to form the isolated regions.

19. A method as claimed in claim 1, wherein the isolation member is formed from a conductive material.

20. A method of producing an optical header that condenses light from a light source onto a recording medium, detects reflected light from the recording medium with a photo detector, and records or reproduces information in the recording medium, said method comprising:
arranging an optical element on a light path from the recording medium to the photo detector to deflect the reflected light from the recording medium to the photo detector;
wherein the optical element has a hologram element manufactured according to the method of Claim 6 that is able to transmit, reflect, diffract, or scatter incident light.

## Patentansprüche

1. Verfahren zum Herstellen eines Hologrammelements mit Interferenzlicht aus einem Film lichtempfindlichen Aufzeichnungsmaterials (21), damit es einer Vervielfältigung eines Master-Hologramms entspricht, die Schritte umfassend:
Ausbilden einer matrixförmigen Vielzahl von isolierten Bereichen des lichtempfindlichen Aufzeichnungsmaterials durch Verwenden eines Isolierungsteils (24), wobei eine Vielzahl von Geräteabschnitten jeweils innerhalb eines entsprechenden isolierten Bereichs ausgebildet wird: und
Belichten der Vielzahl von isolierten Bereichen auf dem Aufzeichnungsmaterial (21) mit Interferenzlicht, um die Vervielfältigung des Master-Hologramms auszubilden;
Schneiden der Vielzahl von Geräteabschnitten an einer Position entlang dem Isolierungsteil (24), um **dadurch** die Geräteabschnitte in separate Hologrammelemente zu teilen.

2. Verfahren nach Anspruch 1, wobei die isolierten Bereiche ein Hologrammelement in jeder aus einer Vielzahl von Flächen isolieren.

3. Verfahren nach Anspruch 1, wobei der isolierte Bereich mindestens der Fläche eines Hologrammelements entspricht.

4. Verfahren nach Anspruch 1, wobei:
das Aufzeichnungsmaterial (21) zwischen einem Paar von Substraten (22, 23) gehalten wird,
jeder aus einer Vielzahl von Geräteabschnitten durch das Isolierungsteil (24) isoliert wird, und
der isolierten Bereich auf eine solche Weise ausgebildet wird, dass die Geräteabschnitte nach Art einer Matrix angeordnet werden.

5. Verfahren nach Anspruch 1, wobei das Interferenzlicht durch zwei oder mehr Lichtstrahlen erzeugt wird.

6. Verfahren nach Anspruch 1, wobei das Interferenzlicht durch Verwendung des Master-Hologramms erzeugt wird.

7. Verfahren nach Anspruch 6, wobei eine Trennungsschicht auf dem Master-Hologramm ausgebildet wird.

8. Verfahren nach Anspruch 6, wobei das Interferenzlicht durch Verwendung eines Lichtilbertragungssystems verarbeitet wird.

9. Verfahren nach Anspruch 1, wobei der Film lichtempfindlichen Aufzeichnungsmaterials (21) zwischen einem Paar von Substraten (22, 23) ausgebildet wird, wobei eines der Substrate dünner als das andere der Substrate ist.

10. Verfahren nach Anspruch 1, wobei das Aufzeichnungsmaterial (21) aus einem Verbundwerkstoff ausgebildet wird, der ein polymerisiertes Polymer einschließt.

11. Verfahren nach Anspruch 1, wobei das Aufzeichnungsmaterial (21) aus einem Verbundwerkstoff ausgebildet wird, der einen polymerisierten Flüssigkristall einschließt.

12. Verfahren nach Anspruch 1, wobei das Aufzeichnungsmaterial (21) aus einem gemischten Verbundwerkstoff ausgebildet wird, der einen nicht polymerisierten Flüssigkristall und ein polymerisiertes Polymer einschließt.

13. Verfahren nach Anspruch 1, wobei das Aufzeichnungsmaterial (21) aus einem gemischten Verbundwerkstoff ausgebildet wird, der ein polymerisiertes Polymer und mindestens einen der folgenden einschließt, nämlich einen nicht polymerisierten Flüssigkristall und einen polymerisierten Flüssigkristall.

14. Verfahren nach Anspruch 10, wobei das Aufzeichnungsmaterial (21) mit dem Interferenzlicht belichtet wird, um eine Polymerisationsreaktion und Phasentrennung des Verbundwerkstoffs hervorzurufen, um **dadurch** eine periodische Struktur auszubilden.

15. Verfahren nach Anspruch 14, wobei eine Brechungsindexmodulation der periodischen Struktur mit einer Polarisationsrichtung eines einfallenden Lichts variiert.

16. Verfahren nach Anspruch 1, wobei das Isolierungsteil (24) außerdem als ein Abstandshalter zur Steuerung einer Schichtdicke des Aufzeichnungsmaterials dient.

17. Verfahren nach Anspruch 1, wobei das Isolierungsteil (24) aus einem Material ausgebildet wird, das imstande ist, Licht einer Wellenlänge des Lichts zur Belichtung zu absorbieren.

18. Verfahren nach Anspruch 1, wobei der Film des Aufzeichnungsmaterials (21) in durch das Isolierungsteil (24) definierten Bereichen durch einen Ein-Tropfen-Füll-(ODF-)Prozess ausgebildet wird, um die isolierten Bereiche auszubilden.

19. Verfahren nach Anspruch 1, wobei das Isolierungsteil aus einem leitfähigen Material ausgebildet wird.

20. Verfahren zur Herstellung eines optischen Kopfes, der Licht von einer Lichtquelle auf ein Aufzeichnungsmedium sammelt, reflektiertes Licht vom Aufzeichnungsmedium mit einem Fotodetektor detektiert und Information in dem Aufzeichnungsmedium aufzeichnet oder wiedergibt, wobei das Verfahren umfasst:
Anordnen eines optischen Elements in einem Strahlengang vom Aufzeichnungsmedium zum Fotodetektor, um das reflektierte Licht vom Aufzeichnungsmedium zum Fotodetektor abzulenken;
wobei das optische Element ein gemäß dem Verfahren nach Anspruch 6 hergestelltes Hologrammelement hat, das imstande ist, einfallendes Licht zu übertragen, zu reflektierten, zu beugen oder zu streuen.

## Revendications

1. Procédé de production d'un élément holographique avec une lumière d'interférence provenant d'un film de matériau d'enregistrement photosensible (21) pour qu'il corresponde à une reproduction d'un hologramme maître, comprenant les étapes consistant à:
former une pluralité de régions isolées en forme de matrice du matériau d'enregistrement photosensible en utilisant un élément d'isolation (24), dans lequel une pluralité de parties de dispositif sont chacune formées à l'intérieur d'une région isolée respective; et
exposer la pluralité de régions isolées sur le matériau d'enregistrement (21) à la lumière d'interférence pour former la reproduction de l'hologramme maître;
découper la pluralité de parties de dispositif à une position le long de l'élément d'isolation (24) de sorte à diviser les parties de dispositif en éléments holographiques distincts.

2. Procédé selon la revendication 1, dans lequel les régions isolées isolent un élément holographique dans chacune d'une pluralité de zones.

3. Procédé selon la revendication 1, dans lequel la région isolée correspond au moins à la zone d'un élément holographique.

4. Procédé selon la revendication 1, dans lequel
le matériau d'enregistrement (21) est maintenu entre une paire de substrats (22, 23),
chacune d'une pluralité de parties de dispositif est isolée par l'élément d'isolation (24), et
la région isolée est formée de telle sorte que les parties de dispositif sont agencées à la manière d'une matrice.

5. Procédé selon la revendication 1, dans lequel la lumière d'interférence est générée par deux faisceaux lumineux ou plus.

6. Procédé selon la revendication 1, dans lequel la lumière d'interférence est générée en utilisant l'hologramme maître.

7. Procédé selon la revendication 6, dans lequel une couche de séparation est formée sur l'hologramme maître.

8. Procédé selon la revendication 6, dans lequel la lumière d'interférence est traitée en utilisant un système optique relais.

9. Procédé selon la revendication 1, dans lequel le film de matériau d'enregistrement photosensible (21) est formé entre une paire de substrats (22, 23), un desdits substrats étant plus mince que l'autre desdits substrats.

10. Procédé selon la revendication 1, dans lequel le matériau d'enregistrement (21) est formé à partir d'un matériau composite contenant un polymère polymérisé.

11. Procédé selon la revendication 1, dans lequel le matériau d'enregistrement (21) est formé à partir d'un matériau composite contenant un cristal liquide polymérisé.

12. Procédé selon la revendication 1, dans lequel le matériau d'enregistrement (21) est formé à partir d'un matériau composite mixte contenant un cristal liquide non polymérisé et un polymère polymérisé.

13. Procédé selon la revendication 1, dans lequel le matériau d'enregistrement (21) est formé à partir d'un matériau composite mixte contenant un polymère polymérisé et au moins un d'un cristal liquide non polymérisé et d'un cristal liquide polymérisé.

14. Procédé selon la revendication 10, dans lequel le matériau d'enregistrement (21) est exposé à la lumière d'interférence pour induire une réaction de polymérisation et une séparation de phase du matériau composite afin de former une structure périodique.

15. Procédé selon la revendication 14, dans lequel une modulation d'indice de réfraction de la structure périodique varie avec une direction de polarisation d'une lumière incidente.

16. Procédé selon la revendication 1, dans lequel l'élément d'isolation (24) sert également d'entretoise pour contrôler une épaisseur de film du matériau d'enregistrement.

17. Procédé selon la revendication 1, dans lequel l'élément d'isolation (24) est formé à partir d'un matériau capable d'absorber la lumière d'une longueur d'onde de la lumière pour exposition.

18. Procédé selon la revendication 1, dans lequel le film du matériau d'enregistrement (21) est formé dans des régions définies par l'élément d'isolation (24) par un procédé de remplissage en une goutte (ODF - One Drop Fill) pour former les régions isolées.

19. Procédé selon la revendication 1, dans lequel l'élément d'isolation est formé à partir d'un matériau conducteur.

20. Procédé de production d'une tête optique qui condense la lumière provenant d'une source de lumière sur un support d'enregistrement, détecte la lumière réfléchie par le support d'enregistrement avec un photodétecteur, et enregistre ou reproduit les informations dans le support d'enregistrement, ledit procédé consistant à:
agencer un élément optique sur un trajet de lumière allant du support d'enregistrement au photodétecteur pour dévier la lumière réfléchie du support d'enregistrement vers le photodétecteur,
dans lequel l'élément optique possède un élément holographique fabriqué selon le procédé de la revendication 6 qui est apte à transmettre, réfléchir, diffracter ou diffuser la lumière incidente.
